# EUROPEAN PATENT SPECIFICATION

(11) **EP 2 039 402 B1**
(45) Date of publication and mention of the grant of the patent: **19.02.2020**
(21) Application number: 08015860.3
(22) Date of filing: 09.09.2008
(51) Int. Cl.: A63F 13/211, A63F 13/814, A63F 13/42

(54) **Input instruction device, input instruction method, and dancing simultation system using the input instruction device and method**
Eingabeanweisungsvorrichtung, Eingabeanweisungsverfahren und Tanzsimulationssystem mit der Eingabeanweisungsvorrichtung und dem Eingabeanweisungsverfahren
Dispositif d'instruction d'entrées, procédé d'instruction d'entrée, et système de simulation de danse utilisant le dispositif et procédé d'instruction d'entrée

(30) Priority: 12.09.2007 JP 2007237278; 20.08.2008 JP 2008211603
(43) Date of publication of application: 25.03.2009
(73) Proprietor: BANDAI NAMCO Entertainment Inc., Minato-ku Tokyo 108-0014 (JP)
(72) Inventor: Nishimoto, Yasuhiro, Tokyo 108-0014 (JP)
(74) Representative: Kramer Barske Schmidtchen Patentanwälte PartG mbB

(56) References cited:
- EP-A1- 1 759 745
- EP-A2- 1 082 982
- WO-A1-2007/069618
- JP-A- 2001 321 564
- US-A1- 2002 055 383
- US-A1- 2003 031 062
- US-A1- 2005 210 418
- US-A1- 2005 261 073
- US-A1- 2007 072 674
- US-A1- 2007 197 290
- MIZELL D: "Using gravity to estimate accelerometer orientation", WEARABLE COMPUTERS, 2003. PROCEEDINGS. SEVENTH IEEE INTERNATIONAL SYMP OSIUM ON 21-23 OCT. 2003, PISCATAWAY, NJ, USA,IEEE, LOS ALAMITOS, CA, USA, 21 October 2003 (2003-10-21), pages 252-253, XP010673894, DOI: 10.1109/ISWC.2003.1241424 ISBN: 978-0-7695-2034-6
- Wii Playable: "Paint", , 27 August 2007 (2007-08-27), Retrieved from the Internet: URL:http://www.wiiplayable.com/?sort_by=&p age=3 [retrieved on 2011-10-19]
- kaokengoku2: "Elite Beat Agents Game Analysis FAQ", Game FAQs , 10 December 2006 (2006-12-10), XP002661857, Retrieved from the Internet: URL:http://www.gamefaqs.com/ds/933052-elit e-beat-agents/faqs/46064 [retrieved on 2011-10-21]

## Description

### BACKGROUND OF THE INVENTION

The present invention relates to an input instruction device, an input instruction method, and a dancing simulation system using the instruction device and method.

A dancing simulation device which gives dance action instructions to the performer so that the performer enjoys dancing has been known. JP-A-2002-166051 and JP-A-2001-224729 disclose a simulation device which instructs movements in the forward direction, the leftward direction, the rightward direction, the diagonal leftward direction, and the diagonal rightward direction for the performer on the simulation screen so that the performer performs a Para Para dance.

However, since such a simulation device requires infrared sensors for detecting the movement of the performer in the five directions at five positions around the performer, the configuration becomes complicated and expensive.

In recent years, a dancing simulation system in which a controller (input section) including a physical quantity sensor (e.g., acceleration sensor) and a simulation device main body are separately provided has been known. In such a dancing simulation system, the performer performs a simulation by performing an input operation of shaking the controller or an input operation of inclining the controller.

However, such a dancing simulation system has not allowed the performer to easily enjoy a given operation (e.g., dancing simulation).

US 2002/0055383 A1 discloses a game system comprising arm operating bands including an inclination sensor for detecting the inclination in the player's arm.

EP 1 082 982 A2 discloses a game system comprising an acceleration sensor for detecting a swinging motion and an impact sensor for detecting a hitting motion.

JP 2001-321564 A discloses a game device having an operating means for a player, and a position detecting board to detect a position of the operating means.

US 2005/261073 A1 discloses a a golf club including an accelerometer, and transmitting input data to a computer, among which the start time and duration of a swing.

### SUMMARY

An object of the present invention is to solve the problems of the above-mentioned prior art. This object is achieved by the input instruction device according to claim 1, the dancing simulation system according to claim 14, and the input instruction method according to claim 15. The other claims relate to further developments.

### BRIEF DESCRIPTION OF THE SEVERAL VIEWS OF THE DRAWING

FIG. 1 is an explanatory view showing an example of a dancing simulation system according to one embodiment of the invention.
FIG. 2 is an explanatory view showing of an example of a controller according to one embodiment of the invention.
FIG. 3 is a diagram for describing the principle of pointing instruction performed by a controller according to one embodiment of the invention.
FIG. 4 is a functional block diagram showing a dancing simulation system according to one embodiment of the invention.
FIG. 5 is an explanatory view showing an example of a simulation screen including an instruction image.
FIG. 6A to FIG. 6C are explanatory views showing a series of changes in a simulation screen including a pointing instruction image.
FIG. 7A to FIG. 7C are explanatory views showing examples of a change in a simulation screen including an instruction image that instructs a turn or punch.
FIGS. 8A and 8B are diagrams for describing examples of an instruction image formed by combining a plurality of moving path instruction image parts.
FIG. 9A to FIG. 9D are explanatory views showing an example of a change in an instruction image.
FIGS. 10A and 10B are diagrams for describing the controller position detection principle.
FIG. 11 is a table for describing first type determination data.
FIG. 12 is a list for describing second type determination data.
FIGS. 13A to 13C are explanatory views showing production screens based on a determination result.
FIGS. 14A and 14B are explanatory views showing a simulation screen pointing operation using a controller.
FIGS. 15A to 15D are diagrams for describing an example of a pointing instruction image.
FIG. 16A to FIG. 16C are explanatory views showing a change in a simulation production screen in which the number of backing dancers increases.
FIGS. 17A and 17B are explanatory views respectively showing a two-performer mode and a four-performer mode.
FIG. 18 is a flowchart showing an example of a process performed by a dancing simulation system according to one embodiment of the invention.
FIG. 19 is a flowchart showing an example of a process performed in a step S14 in FIG 18.
FIG. 20 is a flowchart showing an example of a process performed in a step S40 in FIG 19.
FIG. 21 is a flowchart showing an example of a process performed in a step S42 in FIG 19.
FIG. 22 is a flowchart showing an example of a process performed in a step S22 in FIG 18.

### DETAILED DESCRIPTION OF THE EMBODIMENT

The invention may provide an input instruction device, an input instruction method, and a dancing simulation system that can visually instruct the movement of a controller including a physical quantity sensor and appropriately determine whether or not the controller has been operated according to the instructed movement so that a performer of a dancing simulation can easily and appropriately perform a dancing simulation by using the controller, for example.
(1) According to one embodiment of the invention, there is provided an input instruction device for a simulation system comprising:
   an instruction image generation section that generates an instruction image that instructs a given movement of a controller including a physical quantity sensor; and
   a detection/determination section that acquires a signal from the physical quantity sensor included in the controller, detects the movement of the controller, and determines the degree of conformity of the detected movement of the controller with the movement instructed by the instruction image.
   According to another embodiment of the invention, there is provided a dancing simulation system comprising the above-mentioned sections. According to still another embodiment of the invention, there is provided an input instruction method performing a process using the above-mentioned sections.
   The term "controller" refers to a controller that can be held by the user and moved in real space. The controller is preferably a controller that can be held by the user and moved in the vertical direction, the horizontal direction, the forward and backward direction, and the like, for example.
   The type of the physical quantity sensor included in the controller is not particularly limited insofar as the physical quantity sensor detects a physical quantity from which the movement of the controller in real space can be determined (acquired). The physical quantity sensor is preferably formed as a sensor that detects a physical quantity from which a moving amount per unit time in an arbitrary moving direction can be detected. It is more preferable that the physical quantity sensor detect a three-dimensional movement in real space as moving amounts per unit time in three axial directions. The acceleration sensor 210 detects the accelerations in three-axis (X axis, Y axis, and Z axis) directions. An acceleration sensor that detects a three-dimensional movement as accelerations in X axis, Y axis, and Z axis directions that intersect perpendicularly may be used.
   The term "instruction image that instructs the movement" refers to an instruction image that instructs the user who holds the controller to move the controller in real space in various ways.
   According to these embodiments, the user who holds the controller moves the controller in real space in accordance with the movement instructed by the instruction image while observing the instruction image.
   The detection/determination section acquires the signal from the physical quantity sensor of the controller to detect the movement of the controller in real space. The detection/determination section determines the degree of conformity of the detected movement of the controller in real space with the movement instructed by the instruction image.
   In these embodiments, a section that transmits the determination result to the user may be provided, if necessary. The determination result may be transmitted as image data, may be transmitted aural as a sound output, or may be transmitted as image data and a sound output.
   This enables the user to determine the accuracy of the movement of the controller in real space in accordance with the movement instructed by the instruction image.
   The embodiments in which the movement of the controller is instructed may be applied to a dancing simulation system. For example, the movement of the controller may be appropriately instructed for the performer who holds the controller by using the instruction image, and a dancing simulation production effect such as a given event may be generated based on the determination result as to whether or not the controller has been accurately moved in real space in accordance with the instructions. A dancing simulation system that provides the performer who holds the controller with given dance movement instructions as the instruction image so that the performer can easily perform the dancing simulation may be implemented.
   These embodiments may also be suitably applied to other applications, such as giving aerobic or exercise instructions to a student (or performer) who holds the controller so that the student can perform appropriate aerobics or exercise and determining the result.
(2) In each of the input instruction device and the dancing simulation system,
   the physical quantity sensor may detect a physical quantity from which a moving direction and a moving amount per unit time can be derived;
   the instruction image generation section may generate the instruction image that instructs a moving direction and a moving timing of the controller as the movement; and
   the detection/determination section may acquire the signal from the physical quantity sensor, detect the moving direction and the moving timing of the controller, and determine the degree of conformity of the detected moving direction and moving timing of the controller with the instructions instructed by the instruction image.
   This makes it possible to instruct the moving timing as the movement in addition to the moving direction of the controller.
(3) In each of the input instruction device and the dancing simulation system,
   the instruction image generation section may generate the instruction image that instructs a moving start timing as the moving timing and instructs a moving duration; and
   the detection/determination section may acquire the signal from the physical quantity sensor, detect the moving direction, the moving start timing, and the moving duration of the controller, and determine the degree of conformity of the detected moving direction, moving start timing, and moving duration of the controller with the instructions instructed by the instruction image.
   This makes it possible to make the user successively move a hand or an arm in the instructed direction at a more appropriate timing.
(4) In each of the input instruction device and the dancing simulation system,
   the instruction image may include:
   a moving path instruction image part that instructs a moving direction of the controller along a given path; and
   a timing instruction image part that instructs a moving timing of the controller along the path,
   the instruction image being updated according to a change in content of instruction.

   This makes it possible to visually instruct the moving direction of the controller along a given path by using the moving path instruction image part, and to visually instruct the moving timing of the controller along the path by using the timing instruction image part. Therefore, the performer can visually, instantaneously, and easily determine the movement of the controller from the instruction image.
   The path instructed by the moving path instruction image part may be a straight line or a curve. A path that instructs the user who holds the controller to move the controller in the vertical direction, the horizontal direction, or the forward and backward direction, or make a turn while holding the controller.
   The timing instruction image part may be arbitrarily formed insofar as the timing instruction image part instructs the moving timing of the controller along a given path instructed by the moving path instruction image part. For example, the timing instruction image part may be formed to move along the moving path corresponding to the moving timing of the controller, or may be integrally formed with the moving path instruction image part so that the color of the given path instructed by the moving path instruction image part is changed corresponding to the moving timing of the controller. It suffices that the timing instruction image part be displayed so that the moving timing can be visually recognized.
(5) In each of the input instruction device and the dancing simulation system,
   the timing instruction image part may move from a movement start instruction position to a movement finish instruction position along the moving path instruction image part to instruct a moving start timing and a moving duration of the controller along the instructed path.
   The user can visually and easily determine the moving start timing and the moving duration of the controller along the instructed path by moving the timing instruction image part along the moving path instruction image part.
(6) In each of the input instruction device and the dancing simulation system,
   at least one of the moving path instruction image part and the timing instruction image part may be displayed as a transition image that changes from a previous notice display that is displayed before the moving start timing to a main display when the moving start timing is reached.
   The performer can be appropriately notified of the moving start timing, the moving direction, and the like using the transition image that changes from the previous notice display before the moving start timing to the main display.
(7) In each of the input instruction device and the dancing simulation system,
   the instruction image may be displayed as a set of moving path instruction image parts that instruct a continuous moving path by combining a plurality of the moving path instruction image parts; and
   the timing instruction image part may move along the continuously combined moving path instruction image parts to instruct the moving timing of the controller along a moving path instructed by each of the moving path instruction image parts.
   This makes it possible to instruct the movement and the moving timing of the controller in a more complicated manner with a variety by combining a plurality of moving path instruction image parts.
   Therefore, when applying these embodiments to a dancing simulation such as a dancing simulation in which the performer dances as a cheerleader, a simple dancing simulation with a variety can be implemented in which two controllers held by the performer with both hands are considered to be two pompons held by the cheerleader, which instructs a complex movement (e.g., shaking the pompon to draw the letter "8" or making a turn while holding the pompons) instead of merely moving the pompons in the vertical or horizontal direction.
   The detection/determination process by the detection/determination section may be performed each time the movement instruction is issued using each moving path instruction image part that forms the set of moving path instruction image parts.
(8) In each of the input instruction device and the dancing simulation system,
   the detection/determination section may acquire the signal from the physical quantity sensor, and detect a timing and a duration when the moving amount of the controller per unit time exceeds a given value as the moving start timing and the moving duration of the controller; and
   the detection/determination section may determine the degree of conformity of the detected moving start timing and moving duration of the controller with a moving start timing and determination moving duration for determination related to the instructed moving start timing and instructed moving duration instructed by the instruction image when the detection/determination section has determined that the detected moving direction of the controller coincides with the instructed moving direction instructed by the instruction image.
   The detection/determination section can acquire the signal from the physical quantity sensor, and detect the timing and the duration when the moving amount of the controller per unit time exceeds a given value as the moving start timing and the moving duration of the controller.
   In this case, a given delay time occurs until the moving amount of the controller. per unit time exceeds a given value after the controller has been moved, although the delay time differs depending on the user. Therefore, even if the performer has moved the controller at the timing instructed by the instruction image, detection of the movement is delayed by the given delay time.
   According to these embodiments, the moving start timing for determination and the determination moving duration for determination related to the moving start timing and the moving duration instructed by the instruction image has been set. Even if the detected moving start timing of the controller is delayed as compared with the instructed moving start timing, it is determined that the degree of conformity of the movement of the controller with the instructed movement is high when the moving start timing and the moving duration correspond to the moving start timing and the determination moving duration for determination.
   This eliminates a problem due to the delay in detecting the moving start timing of the controller. Therefore, the movement of the controller can be appropriately determined.
   The moving start timing and the determination moving duration for determination may be set for a beginner performer, an intermediate performer, and a skilled performer corresponding to the level of the user. For example, the degree of difficulty can be set by reducing delay between the moving start timing instructed by the instruction image and the determination moving start timing for a skilled performer, and increasing the delay for a beginner performer. The moving duration for determination may be reduced by the delay of the moving start timing for determination with respect to the instructed moving start timing instructed by the instruction image. The degree of difficulty can be decreased by increasing the moving duration for determination, and can be increased by decreasing the moving duration for determination.
(9) In each of the input instruction device and the dancing simulation system,
   the detection/determination section may perform a first process that compares the signal output from the physical quantity sensor when moving the controller with a first type determination database and determines the position of the controller that is moved, the first type determination database being related to the signal output from the physical quantity sensor when moving the controller in different positions in the moving direction instructed by the instruction image, and the first type determination database being used to determine the position of the controller; and
   the detection/determination section may perform a second process that compares the signal output from the physical quantity sensor when moving the controller in the position determined by the first process in the moving direction instructed by the instruction image with a second type determination database to specify the movement of the controller including at least the moving direction, and determines the degree of conformity of the specified movement with the instructed movement, the second type determination database being related to the position of the controller determined based on the first type determination database, and being used to determine the movement the controller including at least the moving direction from the signal output from the physical quantity sensor when moving the controller in the moving direction instructed by the instruction image.
   According to these embodiments, the first determination process that determines the position of the controller using the first type determination database and the second process that determines the degree of conformity of the movement of the controller including at least the moving direction using the second type determination database are performed.
   For example, three acceleration sensors that detect accelerations in X, Y, and Z axial directions in the space based on the controller may be used as the physical quantity sensor included in the controller. In this case, the values output from the sensors that detect accelerations in X, Y, and Z axial directions differ depending on the position of the controller even when moving the controller in an identical direction (e.g., rightward direction).
   In order to more accurate detect the movement of the controller including at least the moving direction, it is important to determine the position of the controller when the controller is moved in advance, and specify the movement of the controller including at least the moving direction from the signals output from the sensor that detect accelerations in X, Y, and the Z axial directions, while being related to the position of the controller during movement.
   Therefore, the position of the controller when the user moves the rod-shaped controller in accordance with the instructions instructed by the instruction image is classified into basic patterns, for example. For example, basic positions such as the case where the user holds the controller vertically, the case where the user holds the controller horizontally, and the case where the user inclines the controller are taken into consideration.
   The signals output from the physical quantity sensor included in the controller are collected within the predetermined allowable range, and stored in the database, while relating to the different basic positions. In this case, even if the user vertically holds the controller, the user may hold the controller in a state in which the controller is inclined with respect to the vertical direction to some extent. If such a position is excluded from the vertical position, it becomes impossible to classify the basic position of the controller.
   Therefore, the signals output from the sensor of the controller when the inclination of the controller from the basic position (e.g., vertical position) is within the predetermined allowable range (e.g., when the controller held by the performer is inclined with respect to the vertical basic position within the predetermined allowable range) are collected as data within the predetermined allowable range and stored in the database corresponding to the basic position.
   The data collected to be within the predetermined allowable range and stored in the database while being related to each basic position is the first type determination database.
   In these embodiments, the signals output from the physical quantity sensor included in the controller when moving the controller in the moving direction instructed by the instruction image are compared with the first type determination database, and the position of the controller that is moved in the moving direction is determined (first determination process). Therefore, the position (e.g., vertical or horizontal with respect to the screen) of the controller held by the user can be determined.
   When the position of the controller has been determined by the first process, it is necessary to determine whether or not the movement of the controller coincides with the instructions when moving the controller in this position in the instructed direction.
   Therefore, the second type determination database is provided in the same manner as the first type determination database. Specifically, the signals output from the physical quantity sensor of the controller when moving the controller in the direction instructed by the instruction image are collected corresponding to each basic position in which the performer is considered to hold the controller. The second type determination database for specifying the movement of the controller including the moving direction when moving the controller in a given position is provided in which the signals output from the physical quantity sensor when moving the controller in each position are associated with the moving direction of the controller.
   Even if the user moves the controller in an identical direction (e.g., rightward direction), the user may move the controller in a meandering path or a curved path with respect to the instructed direction. If it is determined that the movement along such a moving path does not conform to the movement in the instructed moving direction, a situation in which a wide range of users cannot enjoy the dancing simulation may occur.
   Therefore, when the controller is moved along a moving path with the predetermined allowable range with respect to the moving path instructed by the instruction image (e.g., the moving direction instructed by the moving path instruction section), it is necessary to determine the movement to be a movement in the moving direction.
   Therefore, the signals output from the physical quantity sensor when moving the controller in a specific basic position in the moving direction instructed by the instruction image (e.g., horizontal direction) are collected within the predetermined allowable range, and stored in the database. When the moving direction instructed by the instruction image is the vertical direction, the horizontal direction, the forward and backward direction, a predetermined diagonal direction, a semicircle or a circle along the vertical plane, or a semicircle or a circle along the horizontal plane, the signals output from the physical quantity sensor when moving the controller in a specific basic position in each moving direction are collected as data within the predetermined allowable range.
   The data in which the output data from the physical quantity sensor collected with the predetermined allowable range when moving the controller in a given moving direction is associated with the given moving direction is collected corresponding to each moving direction instructed by the instruction image and stored in the database. The second type determination database is thus generated.
   When the position of the controller has been determined by the first process, the data relating to the signals with the predetermined allowable range output from the physical quantity sensor when moving the controller in the determined position is compared with the signals actually output from the physical quantity sensor of the controller using the second type determination database to specify the movement of the controller including the moving direction.
   For example, a process that specifies the moving direction and the moving amount per unit time of the controller held in the position determined by the first process is performed in real time. The moving direction and the moving timing specified based on the moving direction and the moving amount per unit time of the controller are determined, and whether or not the movement coincides with the movement instructed by the instruction image is determined.
   Therefore, whether or not the performer has moved the controller in the instructed direction can be determined irrespective of the position of the controller.
   It is preferable to perform the first determination process and the second determination process each time the movement of the controller is instructed by the instruction image that instructs one movement. In this case, different movements of the controller are sequentially instructed, and the movement of the controller can be detected accurately without being affected by a change in the position of the controller.
   The first determination process and the second determination process may be performed in this order. Alternatively, the signals output from the physical quantity sensor of the controller may be stored in a buffer, and the first determination process and the second determination process may be performed in parallel.
   When indicating a consecutive moving path by combining a plurality of moving path instruction image parts, the first determination process and the second determination process may be performed in a period in which the controller must be moved to satisfy the moving path and the moving timing instructed by each moving path instruction image part. Alternatively, the first determination process may be appropriately omitted so that the first determination process and the second determination process are performed in a specific period and only the second determination process is performed in a specific period.
(10) In each of the input instruction device and the dancing simulation system,
   the instruction image generation section may generate the instruction image that individually instructs a given movement for at least two controllers each having the physical quantity sensor.
   This makes it possible for the user to hold two controllers with both hands, thus enabling to instruct the movement of each controller by the instruction image so that more complex instructions relating to the movement of the controller can be visually given.
   When applying these embodiments to sport instructions (e.g., dancing simulation or exercise), the movement of each arm of the user can be individually instructed as the movement of the controller. This makes it possible to visually and simply give various instructions on a dance or exercise in which a plurality of movements are combined to the user.
   When applying these embodiments to a dancing simulation or the like, one performer may perform the simulation while holding two controllers with both hands, or two performers may perform the simulation while respectively holding one controller. For example, when forming a system so that four controllers can be used, a four-performer simulation in which operation instructions are given to four performers each holding one controllers may be implemented, or a two-performer dancing simulation in which operation instructions are given to two performers each holding two controllers may be implemented.
   When a single performer performs the simulation while holding two controllers, the operation of each controller may be individually determined, and the determination result for each operation may be evaluated. Alternatively, the operations of the controllers may be evaluated.
(11) Each of the input instruction device and the dancing simulation system, may further comprise:
   a simulation calculation section that instructs a performer to perform a dance action accompanying the movement of the controller, generates a simulation screen including a character that performs a dance related to the instructed dance action based on an input from the controller, and generates a dance background music signal,
   wherein the instruction image generation section generates the instruction image that instructs a given movement of the controller in the simulation screen.

   According to these embodiments, a dancing simulation which instructs a dance movement with one hand or both hands for the performer (user) using the instruction image so that the performer can easily enjoy dancing to the rhythm can be provided.
   Specifically, a dance character associated with the dance action instructed by the instruction image appears on the simulation screen according to these embodiments. The dance character dances to the dance background music, and the instruction image that instructs a given movement of the controller associated with the dance movement is generated and displayed on the simulation image where the dance character appears. Therefore, the performer can dance in accordance with the movement instructed by the instruction image in synchronization with the dance character and background music. As a result, a performer-friendly dancing simulation can be provided.
(12) In each of the input instruction device and the dancing simulation system,
   the simulation calculation section may include a subsection that performs simulation production related to a result of determination for the degree of conformity by the detection/determination section.
   According to these embodiments, when the movement of the controller instructed by the instruction image has been appropriately performed, simulation production corresponding to the degree of conformity determination result is performed, such as generating effect sound or displaying a production effect image on the simulation screen to liven up the simulation.
   When successive movements are instructed by the instruction image, a special event may be generated when the performer has successfully moved the controller corresponding to the successive movements. This improves the simulation production effect.
(13) In each of the input instruction device and the dancing simulation system,
   the simulation calculation section may include a subsection that specifies a cause of an incorrect operation of the controller and notifies the performer of the cause of the incorrect operation based on a result of determination for the degree of conformity by the detection/determination section.
   When the actual movement of the performer does not coincide with the movement instructions instructed by the instruction image, the performer can be urged to more accurately move the controller by notifying the performer of the cause of the incorrect operation.
   For example, when the performer has diagonally moved the controller even though the instruction image instructs the horizontal movement of the controller, the performer is notified to that effect so that the performer can correct the operation to move the controller along a more accurate moving path. Therefore, when applying this embodiment to a dancing simulation or the like, the above configuration prompts the performer to correct the dance and challenge a more difficult dancing simulation.
(14) In each of the input instruction device and the dancing simulation system,
   the simulation calculation section may include a subsection that traces the moving path of the controller detected by the detection/determination section in the simulation screen based on a given condition.
   The user can thus visually observe the degree of similarity between the movement instructed by the instruction image and the actual movement of the controller so that the user can enjoy the simulation while further improving his dance skill.
(15) Each of the input instruction device and the dancing simulation system, may further comprise:
   a pointing position detection section that acquires an imaging signal from a imaging section provided in the controller and detects a pointing position of the controller on the simulation screen, the imaging section imaging a reference position recognition body disposed or displayed at a position related to the simulation screen,
   wherein the simulation calculation section includes a subsection that displays a position instruction image that instructs to point at a predetermined position of the simulation screen at a given timing during the simulation; and
   wherein the simulation calculation section generates an event related to a pointing at the predetermined position when the pointing at the predetermined position has been detected at the timing.

   It suffices that the reference position recognition body allow the pointing position of the controller on the simulation screen to be specified from the captured image. For example, the reference position recognition body may be a recognition body provided at a position associated with the simulation screen (e.g., at least two light sources or recognizable objects), or may be a recognition image displayed on the simulation screen.
   For example, the two light sources may be provided around a display and imaged by using an imaging section provided in the controller so that a CPU can determine the relative positional relationship between the controller and the simulation screen on the screen and determine the pointing position of the controller on the simulation screen.
   In these embodiments, the position instruction image that instructs the performer to point a given position on the simulation screen at a given timing during the simulation is generated and displayed.
   When the performer has successfully pointed the simulation screen using the controller in accordance with the instruction, a predetermined event (e.g., the number of backing dancers appearing on the simulation screen increases or a plurality of backing dancers who dance on the simulation screen give special performance) may be generated to increase the range of the simulation.
(16) In each of the input instruction device and the dancing simulation system,
   the instruction image generation section may generate the instruction image that instructs a given movement of the controller related to the predetermined pointed position of the simulation screen as the event related to the pointing at the predetermined position.

Some embodiments of the invention will be described below. Note that the embodiments described below do not in any way limit the scope of the invention laid out in the claims herein. In addition, not all of the elements of the embodiments described below should be taken as essential requirements of the invention.

The following embodiments illustrate an example in which the invention is applied to a dancing simulation system.

### 1. Outline of system

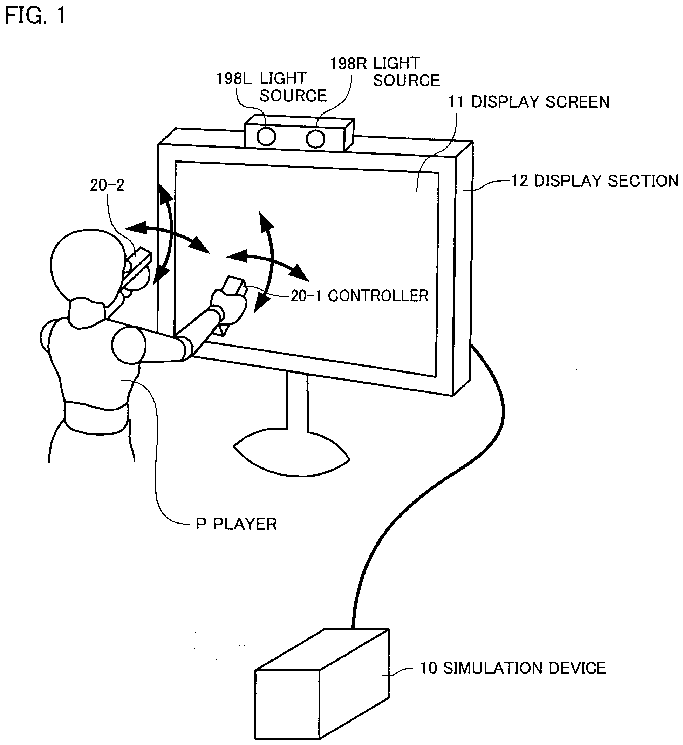

FIG. 1 is a schematic external view showing a dancing simulation system according to one embodiment of the invention.

The dancing simulation system according to this embodiment includes a display section 12 that displays a simulation image on a display screen 11, a simulation device 10 (simulation device main body) that performs a simulation process and the like, a first controller 20-1 (operation input section), and a second controller 20-2 (operation input section), the first controller 20-1 and the second controller 20-2 being held by a performer P with either hand so that their positions and directions within a predetermined range can be arbitrarily changed.

In the example shown in FIG 1, the simulation device 10 and each of the controllers 20-1 and 20-2 exchange various types of information via wireless communication.

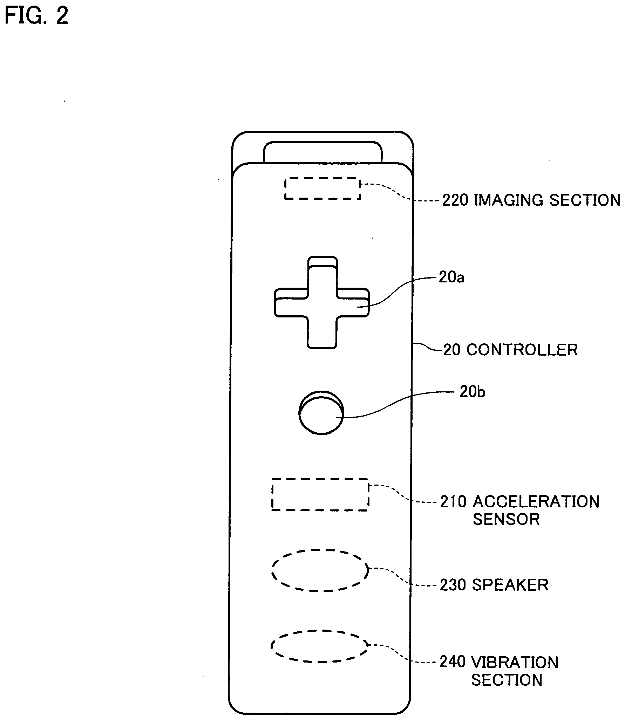

FIG. 2 is a schematic external view showing the controller 20 according to this embodiment.

The controller 20 includes an arrow key 16a and an operation button 16b as an operation section.

The controller 20 also includes an acceleration sensor 210 as a physical quantity sensor that detects information which changes corresponding to the inclination and the movement of the controller so that information relating to the inclination and the movement of the controller in real space can be acquired.

The acceleration sensor 210 according to this embodiment is formed as a triaxial acceleration sensor 210 (detection section). The acceleration sensor 210 detects the direction and the degree of inclination of the controller as acceleration vectors (inclination information) in three axial directions applied to the controller.

The acceleration sensor 210 detects the movement of the controller (i.e., changes in speed and direction of the controller per unit time due to the movement of the controller) as acceleration vectors (movement information) in three axial directions applied to the controller.

As shown in FIG. 1, when the performer P has moved the first controller 20-1 and the second controller 20-2 while holding each controller to change the inclination and the movement of each controller, the simulation device 10 detects and determines the inclination and the movement of each of the first controller 20-1 and the second controller 20-2 in real space based on the information that changes corresponding to the inclination and the movement of each controller, and controls the simulation.

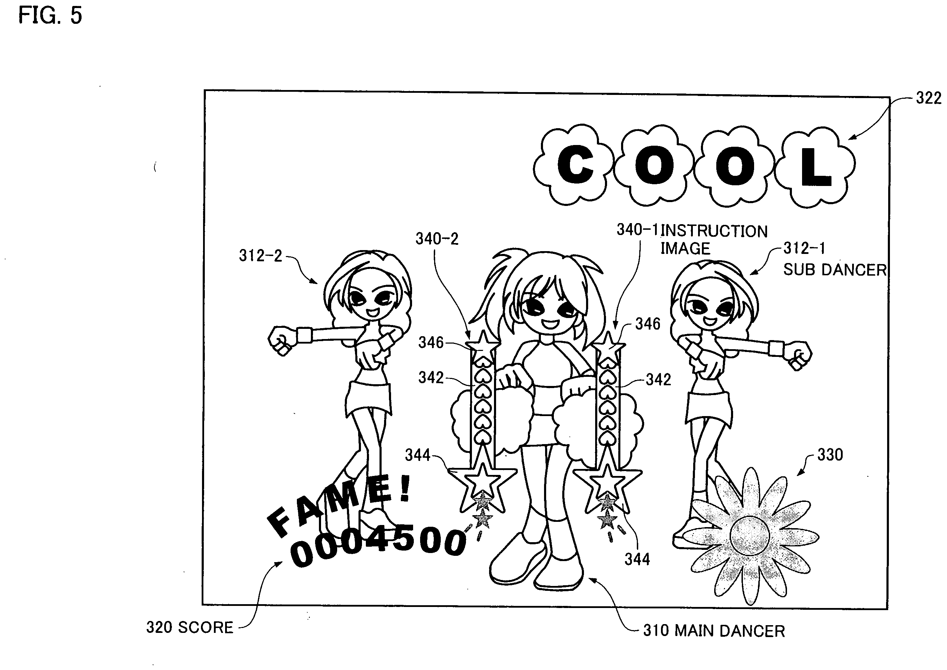

The dancing simulation system according to this embodiment displays a dance simulation screen shown in FIG 5, and displays an instruction image 340 in the simulation screen with the progress of the simulation. The instruction image 340 instructs the performer who holds the controller to move the controller in real space in various ways.

The performer who holds the controller 20 moves the controller 20 in real space in accordance with the movement of the controller instructed by the instruction image while observing the instruction image.

The simulation device 10 acquires signals from the acceleration sensor 210 of the controller 20 to detect the movement of the controller in real space. The simulation device 10 determines the degree of conformity of the detected movement of the controller in real space with the movement instructed by the instruction image.

The simulation device 10 generates a given event or a simulation production effect based on the determination result.

The performer P who holds the controller 20 is thus provided with given dance movement instructions or the like using the instruction image 340 so that the performer can easily perform the dancing simulation.

The controller 20 has a pointing function of indicating (pointing) an arbitrary position on the display screen 11.

A pair of light sources 198R and 198L (reference position recognition portions) is disposed around the display section 12 at a position associated with the display screen 11. The light sources 198R and 198L are disposed at a predetermined interval along the upper side of the display section 12, and are formed to project infrared radiation (i.e., invisible light). An imaging section 220 that captures an image in front of the controller 20 is provided on the front side of the controller 20.

The pointing position of the controller 20 on the display screen 11 is calculated as follows.

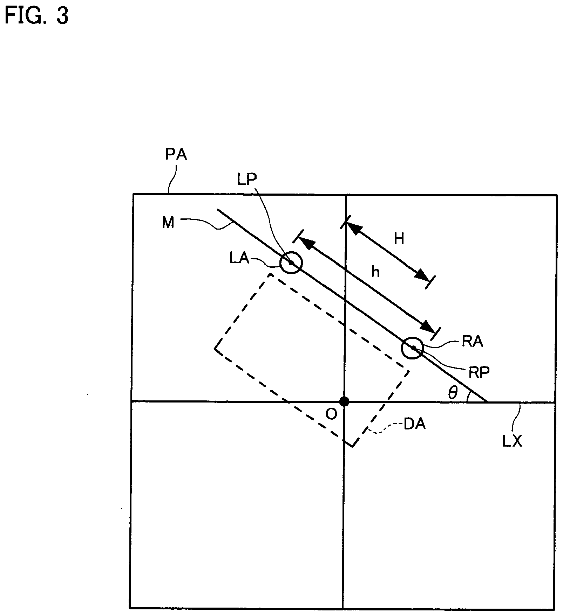

The rectangular area shown in FIG 3 instructs a captured image PA acquired by the imaging section 220 (image sensor). The captured image PA is an image corresponding to the position and the direction of the controller 20.

The position RP of an area RA corresponding to the light source 198R and the position LP of an area LA corresponding to the light source 198L included in the captured image PA are calculated. The positions RP and LP are instructed by position coordinates specified by a two-dimensional coordinate system (XY-axis coordinate system) in the captured image PA. The distance between the light sources 198R and 198L and the relative positions of the light sources 198R and 198L associated with the display screen 11 are known in advance. Therefore, the simulation device 10 calculates the indication position (pointing position) on the display screen 11 using the controller 20 from the coordinates of the positions RP and LP thus calculated.

In this embodiment, the origin O of the captured image PA is determined to be the pointing position of the controller 20. The pointing position is calculated from the relative positional relationship between the origin O of the captured image PA, the positions RP and LP in the captured image PA, and a display screen area DA that is an area in the captured image PA corresponding to the display screen 11.

In the example shown in FIG 3, the positions RP and LP are position above the center of an imaging area PA to some extent in a state in which the line segment that connects the positions RP and LP is rotated clockwise by theta degrees with respect to a reference line L (X axis) of the imaging area PA. In the example shown in FIG. 3, the origin O corresponds to a predetermined position on the lower right of the display screen area DA so that the coordinates of the indication position (pointing position) of the controller 20 on the display screen 11 can be calculated.

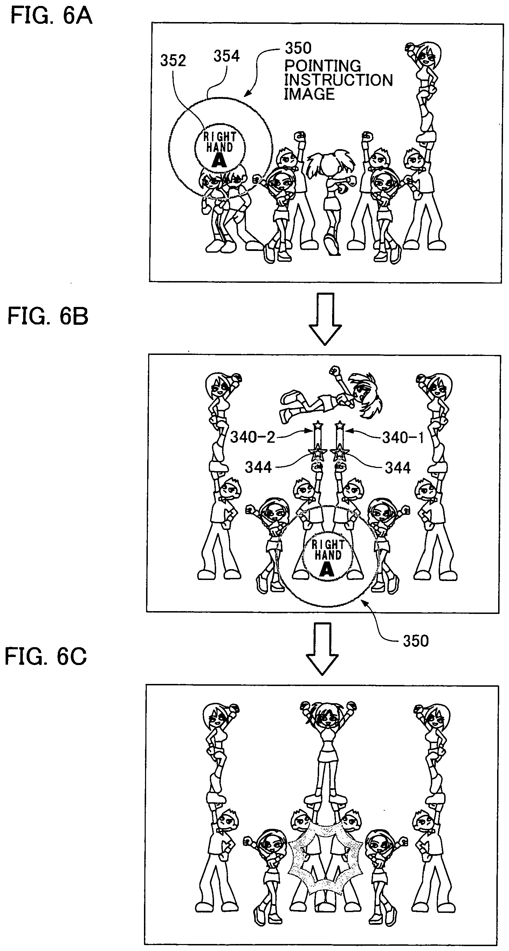

In the dancing simulation system according to this embodiment, a simulation image shown in FIGS. 6A to 6C is displayed on the display screen 11, for example. A position instruction image 350 that instructs the performer to points at a predetermined position in the simulation image at a given timing using the first controller 20-1 and the second controller 20-2 held with the left hand or the right hand with the progress of the dancing simulation is displayed in the simulation image. When the performer has instructed the pointing position instructed by the position instruction image at a predetermined timing by using the first controller 20-1 and the second controller 20-2, the simulation device 10 determines whether or not the predetermined position has been instructed at an appropriate timing. When the pointing operation has been performed appropriately, the simulation device 10 performs a simulation production process that generates a predetermined event (e.g., the number of backing dancers appearing in the simulation image increases).

It suffices that the reference position recognition body allow the pointing position of the controller on the simulation screen to be specified from the captured image. For example, the reference position recognition body may be a recognition body provided at a position associated with the simulation screen (e.g., at least two light sources or recognizable objects), or may be a recognition image displayed on the simulation screen. For example, two reference position recognition images may be displayed at predetermined positions on the simulation screen as the recognition bodies. The number of recognition bodies need not necessarily two. A recognition body having a shape for which the relative positional relationship with the display screen 11 can be specified. The number of recognition bodies may be one.

### 2. Configuration

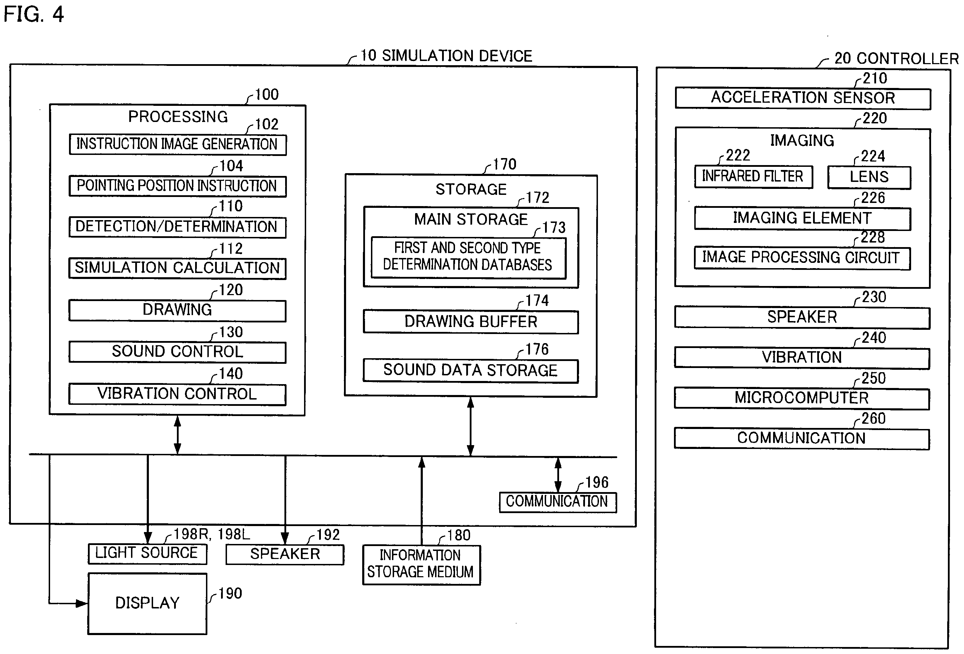

FIG. 4 shows an example of a functional block diagram of the dancing simulation system according to this embodiment. Note that the dancing simulation system according to this embodiment need not necessarily include all of the elements shown in FIG 1. The dancing simulation system according to this embodiment may have a configuration in which some of the elements are omitted.

The dancing simulation system according to this embodiment includes the simulation device 10, the controller 20 as an input section, an information storage medium 180, a display section (display device) 190, a speaker 192, and the light sources 198R and 198L.

The controller 20 includes the acceleration sensor 210, the imaging section 220, a speaker 230, a vibration section 240, a microcomputer 250, and a communication section 260. The controller 20 may include an image input sensor, a sound input sensor, and a pressure sensor.

The acceleration sensor 210 detects the accelerations in three axial directions (X axis, Y axis, and Z axis). Specifically, the acceleration sensor 210 detects the accelerations in the vertical direction, the horizontal direction, and the backward or forward direction. The acceleration sensor 210 detects the accelerations at intervals of 5 msec. The acceleration sensor 210 may detect the accelerations in one axis, two axes, or six axes. The accelerations detected by the acceleration sensor are transmitted to the simulation device through the communication section 260.

The imaging section 220 includes an infrared filter 222, a lens 224, an imaging element (image sensor) 226, and an image processing circuit 228. The infrared filter 222 is disposed on the front side of the controller, and allows only infrared radiation contained in light incident from the light source 198 disposed while being associated with the display section 190 to pass through. The lens 224 condenses the infrared radiation that has passed through the infrared filter 222, and emits the infrared radiation to the imaging element 226. The imaging element 226 is a solid-state imaging element such as a CMOS sensor or a CCD. The imaging element 226 images the infrared radiation condensed by the lens 224 to generate a captured image. The image processing circuit 228 processes the captured image generated by the imaging device 226. For example, the image processing circuit 228 processes the captured image from the imaging device 226 to detect a high luminance component, and detects light source position information (specific position) in the captured image. When a plurality of light sources are provided, the image processing circuit 228 detects the position information relating to the plurality of light sources in the captured image. The detected position information is transmitted to the simulation device through the communication section 260. In this embodiment, the controller 20 may be utilized as a pointing device that points a position (position information) on the simulation screen.

The speaker 230 outputs sound acquired from the simulation device through the communication section 260. In this embodiment, the speaker 230 outputs confirmation sound transmitted from the simulation device or effect sound corresponding to motion.

The vibration section (vibrator) 240 receives a vibration signal transmitted from the simulation device, and operates based on the vibration signal.

The microcomputer 250 outputs sound or operates the vibrator based on data from received from the simulation device. The microcomputer 250 causes the accelerations detected by the acceleration sensor 210 to be transmitted to the simulation device through the communication section 260, or causes the position information detected by the imaging section 220 to be transmitted to the simulation device 10 through the communication section 260.

The communication section 260 includes an antenna and a wireless module. The communication section 260 exchanges data with the simulation device via wireless communication using the Bluetooth (registered trademark) technology, for example. The communication section 260 according to this embodiment transmits the accelerations detected by the acceleration sensor 210, the position information detected by the imaging section 220, and the like to the simulation device at alternate intervals of 4 msec and 6 msec. The communication section 260 may be connected to the simulation device via a communication cable, and exchange information with the simulation device via the communication cable.

The controller 20 may also include operating sections such as a button, a lever (analog pad), a mouse, an arrow key, and a touch panel display. The controller 20 may include a gyrosensor that detects the angular velocity which changes due to the input operation of the performer.

The simulation device 10 according to this embodiment is described below.

The simulation device 10 according to this embodiment includes a storage section 170, a processing section 100, and a communication section 196.

The storage section 170 serves as a work area for the processing section 100, the communication section 194, and the like. The function of the storage section 170 may be implemented by hardware such as a RAM (VRAM).

The storage section 170 according to this embodiment includes a main storage section 172, a drawing buffer 174, and a sound data storage section 176.

The main storage section 172 serves as a work area for the processing section 100, the communication section 194, and the like. The function of the storage section 170 may be implemented by hardware such as a RAM (VRAM).

In this embodiment, the main storage section 172 includes a storage area 173 that stores first and second type determination databases described later.

The drawing buffer 174 stores an image generated by a drawing section 120.

The sound data storage section 176 stores confirmation sound that instructs the reaction of the controller with regard to the input operation of the performer and effect sound output along with a simulation calculation process. The sound data storage section 176 stores a plurality of types of confirmation sound corresponding to detected information. The sound data storage section 176 stores a plurality of types of effect sound corresponding to motion and a given event.

The processing section 100 performs various processes according to this embodiment based on a program (data) stored in (read from) the information storage medium 180. Specifically, the information storage medium 180 stores a program that causes a computer to function as each section according to this embodiment (i.e., a program that causes a computer to perform the process of each section). The information storage medium 180 includes a memory card that stores a performer's personal data, simulation save data, and the like.

The communication section 196 can communicate with another simulation device through a network (Internet). The function of the communication section 196 may be implemented by hardware such as a processor, a communication ASIC, or a network interface card, a program, or the like. The communication section 196 can perform cable communication and wireless communication.

The communication section 196 includes an antenna and a wireless module, and exchanges data with the communication section 260 of the controller 20 using the Bluetooth (registered trademark) technology, for example. For example, the communication section 196 transmits sound data (e.g., confirmation sound and effect sound) and the vibration signal to the controller, and receives information detected by the acceleration sensor and the image sensor of the controller 20 at alternate intervals of 4 msec and 6 msec.

A program (data) that causes a computer to function as each section according to this embodiment may be distributed to the information storage medium 180 (or the storage section 170) from a storage section or an information storage medium included in a server through a network. Use of the information storage medium of the server is also included within the scope of the invention.

The processing section 100 (processor) performs a simulation calculation process, an image generation process, and a sound control process based on detected information received from the controller 20, a program loaded into the storage section 170 from the information storage medium 180, and the like.

The processing section 100 according to this embodiment functions as an instruction image generation section 102, a pointing position instruction section 104, a detection/determination section 110, a simulation calculation section 112, a drawing section 120, a sound control section 130, and a vibration control section 140.

The instruction image generation section 102 generates an instruction image that instructs a given movement of the controller 20 on the simulation screen. Specifically, the instruction image generation section 102 generates the instruction image 340 that instructs the moving direction and the moving timing of the controller 20 as the given movement of the controller 20.

The pointing position instruction section 104 generates a position instruction image (pointing instruction image) 350 that instructs the performer to point a predetermined position on the simulation screen at a given timing during the simulation.

The detection/determination section 110 detects the movement of the controller 20 based on information obtained from the acceleration sensor 210 of the controller 20, and determines the degree of conformity of the detected movement of the controller 20 with the movement instructed by the instruction image.

The detection/determination section 110 detects the pointing position of the controller 20 on the simulation screen based on information from the imaging section 220 of the controller 20, and determines whether or not the detected pointing position has been appropriately pointed at the predetermined timing instructed by the position instruction image.

The simulation calculation section 112 performs simulation calculations based on the determination result of the detection/determination section 110 and a given program.

For example, the simulation calculation section 112 disposes various objects (i.e., objects formed by a primitive such as a polygon, free-form surface, or subdivision surface) that represent display objects such as a character (performer character or enemy character), a moving body (e.g., car or airplane), a building, a tree, a pillar, a wall, or a map (topography) in an object space. Specifically, the simulation calculation section 112 determines the position and the rotational angle (synonymous with orientation or direction) of the object in a world coordinate system, and disposes the object at the determined position (X, Y, Z) and the determined rotational angle (rotational angles around X, Y, and Z axes).

The simulation calculation section 112 controls a virtual camera (viewpoint) for generating an image viewed from a given (arbitrary) viewpoint in the object space. Specifically, the simulation calculation section 112 controls the position (X, Y, Z) or the rotational angle (rotational angles around X, Y, and Z axes) of the virtual camera (controls the viewpoint position, the line-of-sight direction, or the angle of view).

For example, when imaging the object (e.g., character) from behind using the virtual camera, the simulation calculation section 112 controls the position or the rotational angle (direction) of the virtual camera so that the virtual camera follows a change in position or rotation of the object. In this case, the simulation calculation section 112 may control the virtual camera based on information such as the position, the rotational angle, or the speed of the object obtained by a motion generation section 124 described later. Alternatively, the simulation calculation section 112 may rotate the virtual camera at a predetermined rotational angle, or move the virtual camera along a predetermined path. In this case, the simulation calculation section 112 controls the virtual camera based on virtual camera data for specifying the position (path) or the rotational angle of the virtual camera. When a plurality of virtual cameras (view points) are provided, the above-described control process is performed on each virtual camera.

The simulation calculation section 112 calculates the movement/motion (movement/motion simulation) of a model (e.g., character, car, or airplane). Specifically, the simulation calculation section 112 causes the model to move in the object space or causes the object to perform a motion (animation) based on detected information determined to satisfy a predetermined condition, a program (movement/motion algorithm), motion data, and the like. Specifically, the simulation calculation section 112 performs a simulation process that sequentially calculates movement information (position, rotational angle, speed, or acceleration) and motion information (position or rotational angle of each part that forms the object) of the object in frame (1/60 sec) units. Note that the term "frame" refers to a time unit when performing the object movement/motion process (simulation process) and the image generation process.

The drawing section 120 performs a drawing process based on the results of various processes (simulation calculation process) performed by the processing section 100 to generate an image, and outputs the image to the display section 190. When generating a three-dimensional simulation image, display object data (object data or model data) including vertex data (e.g., vertex position coordinates, texture coordinates, color data, normal vector, or alpha value) relating to each vertex that defines the display object (object or model) is input to the drawing section 120, and the drawing section 120 performs a vertex process based on the vertex data included in the input display object data. When performing the vertex process, the drawing section 120 may perform a vertex generation process (tessellation, curved surface division, or polygon division) for dividing the polygon, if necessary. In the vertex process, the drawing section 120 performs a vertex movement process and a geometric process such as coordinate transformation (world coordinate transformation or camera coordinate transformation), clipping, perspective transformation, or a light source process, and changes (updates or adjusts) the vertex data relating to the vertices that form the display object based on the processing results. The drawing section 120 performs rasterization (scan conversion) based on the vertex data after the vertex process so that the surface of the polygon (primitive) is associated with pixels. The drawing section 120 then performs a pixel process (fragment process) that draws pixels which form the image (fragments which form the display screen). In the pixel process, the drawing section 120 determines the final pixel drawing color by performing various processes such as a texture reading (texture mapping) process, a color data setting/change process, a translucent blending process, and an anti-aliasing process, and outputs (draws) the drawing color of the object subjected to perspective transformation to (in) the drawing buffer 174 (i.e., a buffer that can store image information in pixel units; VRAM or rendering target). Specifically, the pixel process includes a per-pixel process that sets or changes the image information (e.g., color, normal, luminance, and alpha value) in pixel units. This causes an image viewed from the virtual camera (given viewpoint) set in the object space to be generated. When a plurality of virtual cameras (viewpoints) are provided, an image may be generated so that images (divided images) viewed from the respective virtual cameras can be displayed on one screen.

The vertex process and the pixel process performed by the drawing section 120 may be implemented by hardware that enables a programmable polygon (primitive) drawing process (i.e., programmable shader (vertex shader and pixel shader)) based on a shader program written using a shading language. The programmable shader enables a programmable per-vertex process and per-pixel process to increase the degree of freedom relating to the drawing process so that the representation capability is significantly improved as compared with a fixed hardware drawing process.

The drawing section 120 performs a geometric process, a texture mapping process, a hidden surface removal process, an alpha blending process, and the like when drawing the display object.

In the geometric process, the display object is subjected to a coordinate transformation process, a clipping process, a perspective transformation process, a light source calculation process, and the like. The display object data (e.g., display object's vertex position coordinates, texture coordinates, color data (luminance data), normal vector, or alpha value) after the geometric process (after perspective transformation) is stored in the main storage section 171.

The term "texture mapping process" refers to a process for mapping a texture (texel value) stored in the storage section 170 on the display object. Specifically, the drawing section 120 reads a texture (surface properties such as color (RGB) and alpha value) from the storage section 170 using the texture coordinates set (assigned) to the vertices of the display object, for example. The drawing section 120 maps the texture (two-dimensional image) on the display object. In this case, the drawing section 120 performs a pixel-texel association process, bilinear interpolation (texel interpolation), and the like.

The drawing section 130 may perform a hidden surface removal process by a Z buffer method (depth comparison method or Z test) using a Z buffer (depth buffer) that stores the Z value (depth information) of the drawing pixel. Specifically, the drawing section 120 refers to the Z value stored in the Z buffer when drawing the drawing pixel corresponding to the primitive of the object. The drawing section 120 compares the Z value stored in the Z buffer with the Z value of the drawing pixel of the primitive. When the Z value of the drawing pixel is the Z value in front of the virtual camera (e.g., a small Z value), the drawing section 120 draws the drawing pixel and updates the Z value stored in the Z buffer with a new Z value.

The term "alpha blending process" refers to a translucent blending process (e.g., normal alpha blending, additive alpha blending, or subtractive alpha blending) based on an alpha value (A value). In normal alpha blending, the drawing section 120 calculates a color obtained by blending two colors by performing linear interpolation using the alpha value as the degree of blending.

The term "alpha value" refers to information that can be stored while being associated with each pixel (texel or dot), such as additional information other than the color information that instructs the luminance of each RGB color component. The alpha value may be used as mask information, translucency (equivalent to transparency or opacity), bump information, or the like.

The sound control section 130 causes at least one of the speaker 230 of the controller and the speaker 192 to output sound (including confirmation sound and effect sound) stored in the sound data storage section 176 based on the results of various processes (e.g., the determination process and the simulation calculation process) performed by the processing section 100.

The sound control section 130 according to this embodiment causes the speaker to output confirmation sound when the detection/determination section 110 has determined that the predetermined condition is satisfied. The sound control section 130 may cause the speaker to output confirmation sound corresponding to the detected information. The sound control section 130 may cause only the speaker 230 of the controller to output confirmation sound, and may cause the speaker 192 to output effect sound corresponding to the simulation calculation process (e.g., effect sound corresponding to the motion determined based on the detected information).

The vibration control section 140 causes the vibration section 240 of the controller to vibrate based on a predetermined condition.

The dancing simulation system according to this embodiment may be a system dedicated to a single-performer mode in which only one performer can perform the simulation, or may be a system provided with a multi-performer mode in which a plurality of performers can perform the simulation. When a plurality of performers perform the simulation, the simulation images and the simulation sound provided to the performers may be generated using one simulation device and one display section. The simulation images and the simulation sound may be generated by a distributed process using a plurality of simulation devices connected through a network (transmission line or communication line) or the like. In this embodiment, when a plurality of performers perform a simulation, a determination as to whether or not a predetermined condition is satisfied based on the detected information, sound control based on the determination result, vibration control are performed corresponding to the controller of each performer.

The information storage medium 180 (computer-readable medium) stores a program, data, and the like. The function of the information storage medium 180 may be implemented by hardware such as an optical disk (CD or DVD), a magneto-optical disk (MO), a magnetic disk, a hard disk, a magnetic tape, or a memory (ROM).

The display section 190 outputs an image generated by the processing section 100. The function of the display section 190 may be implemented by hardware such as a CRT display, a liquid crystal display (LCD), an organic EL display (OELD), a plasma display panel (PDP), a touch panel display, or a head mount display (HMD).

The speaker 192 outputs sound reproduced by the sound control section 130. The function of the speaker 192 may be implemented by hardware such as a speaker or a headphone. The speaker 192 may be a speaker provided in the display section. For example, when a television set (home television set) is used as the display section, the speaker 192 may be a speaker provided in the television set.

The light source 198 is an LED that emits infrared radiation (i.e., invisible light), for example. The light source 198 is disposed while being associated with the display section 190. In this embodiment, a plurality of light sources (light source 198R and light source 198L) are provided. The light source R and the light source L are disposed at a predetermined interval.

### 3. Method according to this embodiment

A method according to this embodiment is described below with reference to the drawings.

### 3-1: Simulation performed according to this embodiment and instruction image display process

FIG. 5 shows an example of the simulation screen displayed according to this embodiment.

The simulation performed by the dancing simulation system according to this embodiment is configured so that the performer performs the leader of a cheerleading dance team to lead the dance of the entire team while giving dance instructions to the members of the team aiming to succeed in the dance.

As shown in FIG. 5, floral beat characters 330 that instruct the beat of background music (BGM) are displayed on the simulation screen. The beat characters 330 blink on the beat.

A main dancer 310 who holds pompons with both hands and a plurality of sub dancers 312-1 and 312-2 positioned behind the main dancer 310 are displayed on the simulation screen.

The main dancer 310 is a performer character that reproduces a dance corresponding to the operation of the performer as a cheerleader.

The instruction image generation section 102 generates and displays a pair of instruction images 340-1 and 340-2 that respectively instruct the movements of the first controller 20-1 and the second controller 20-2 held by the performer with the progress of the simulation. In this embodiment, the instruction image 340 is displayed at given time intervals in a predetermined order with the progress of the simulation.

In FIG 5, the instruction images 340-1 and 340-2 that respectively instruct the movements of the first controller 20-1 and the second controller 20-2 held by the performer are displayed on either side of the main dancer 310 that is a player character.

The instruction image 340-1 instructs the operation of the first controller 20-1 held by the performer with the right hand, and the instruction image 340-2 instructs the operation of the second controller 20-2 held by the performer with the left hand.

The instruction images 340-1 and 340-2 are displayed at given positions on the simulation screen with the progress of the simulation. The instruction images 340-1 and 340-2 give instructions to the performer with regard to given movements (i.e., moving direction, moving timing, and moving duration) of the controllers 20-1 and 20-2.

The instruction image 340 according to this embodiment includes a trace rail 342 (or a moving path instruction image part) that instructs a moving direction of the controller, a timing mark 344 (or a timing instruction image part) that instructs the moving timing, and an operation finish mark 346 that instructs the expiration of the moving duration.

The timing mark 344 is displayed on one end of the trace rail 342, and the operation finish mark 36 is displayed on the other end of the trace rail 342 in a fixed state.

The timing mark 344 starts to move along the trace rail 342 in the moving direction of the controller 20 in synchronization with the operation start timing of the controller 20, and reaches the operation finish mark 346 at the finish timing of the moving duration.

The performer can determine the moving timing and the moving direction of the controller by the trace rail 342 and the timing mark 344 that moves along the trace rail 342, and can determine the expiration of the operation duration when the timing mark 344 has reached the operation finish mark 346.

When the timing mark 344 has moved along the trace rail 342 and reached the operation finish mark 346, the next timing mark 344 may be displayed on the identical trace rail 342 and moved to give the identical movement instruction to the performer. In the simulation image shown in FIG. 5, the trace rail 342 instructs the upward movement of the controller. In this embodiment, the instruction image 340 that instructs the movement in another reference direction (e.g., right direction, left direction, diagonally right upward direction, diagonally left upward direction, downward direction, right downward direction, left downward direction, and backward or forward direction (depth direction or front direction)) is generated and displayed.

The instruction image 340 that instructs the movement in the backward or forward direction (depth direction or front direction) may be formed by displaying the trace rail 342 in the simulation space displayed on the simulation screen in the forward direction and moving the timing mark 344 along the trace rail 342 in the forward direction or the backward direction, for example.

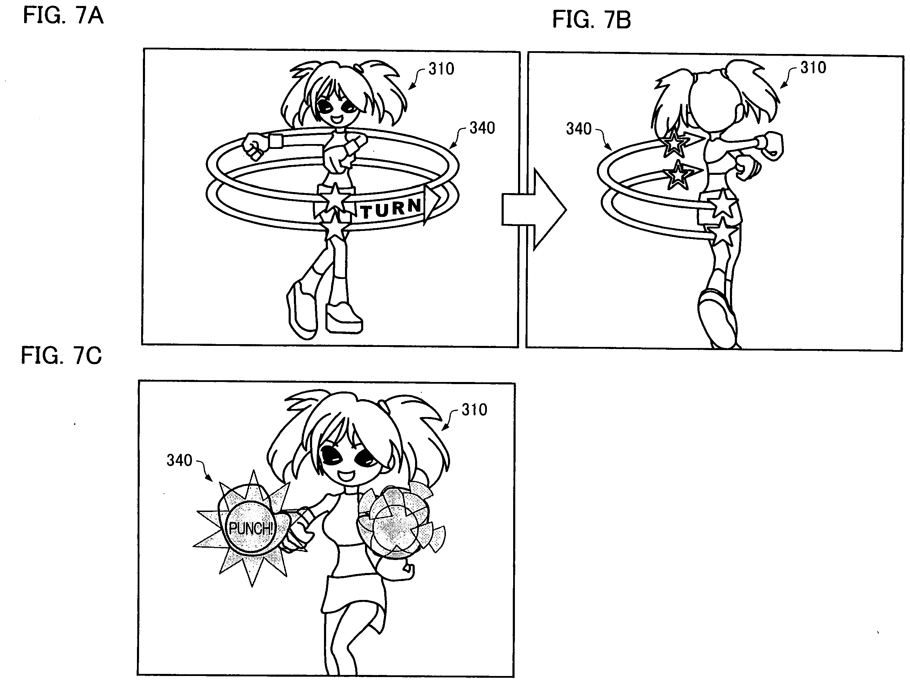

The instruction image 340 that instructs the performer to make a right turn is displayed in FIGS. 7A and 7B, and the instruction image 340 that instructs the performer to perform a punch operation (i.e., move the controller forward) is displayed in FIG. 7C.

In this embodiment, when the simulation has started, the instruction images 340 that instruct the performer who gets into the rhythm of the background music to make a dance action are displayed one after another with the progress of the simulation.

In this embodiment, the main dancer 310 who dances corresponding to the dance action instructed by the instruction image 340 appears on the simulation screen, and the main dancer 310 and the sub dancers 312 dance to the background music. The performer moves the first controller 20-1 and the second controller 20-2 (i.e., both hands) in real space in accordance with the instructions given by the instruction images 340-1 and 340-2 displayed one after another while listening to the background music and watching the main dancer 310 displayed on the simulation screen to enjoy dancing to the rhythm as if the performer were the leader of the cheerleading dance team.

In this embodiment, a set of moving path instruction image parts that instruct a continuous moving path is generated and displayed by combining a plurality of trace rails (i.e., moving path instruction image parts) so that complex movement instructions can be given to the performer.

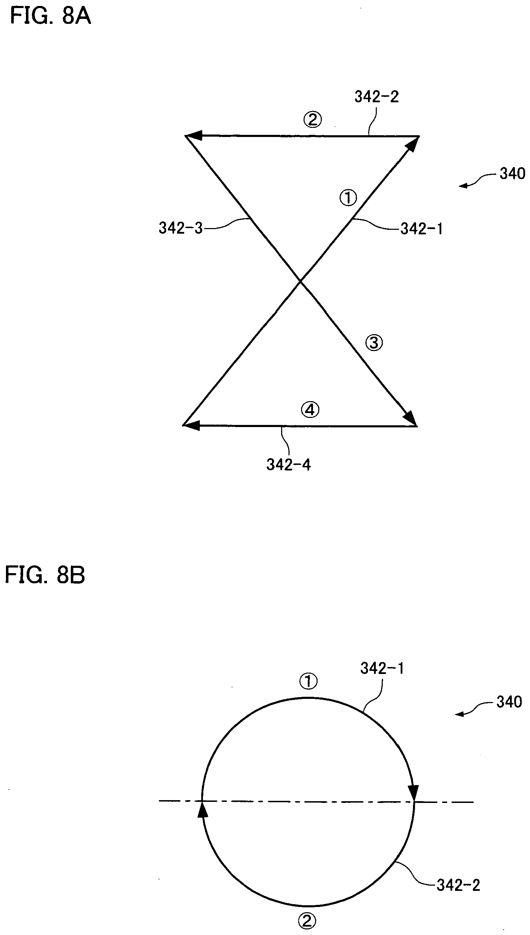

FIG. 8A shows an example of the instruction image 340 that instructs the performer to move the controller 20 almost in the shape of the letter "8". Four trace rails 342-1 to 342-4 that differ in moving direction are displayed in combination.

The timing mark 344 sequentially moves along the four trace rails 342-1 to 342-4 so that the performer can easily and visually determine the moving direction, the moving timing, and the moving duration of the corresponding controller.

FIG. 8B shows the instruction image 340 that instructs the performer to circularly move the controller 20 clockwise by combining a plurality of arc-shaped trace rails 342-1 and 342-2.

Since a plurality of trace rails 342 are displayed in combination, the instruction image shown in FIG. 8A can instruct the performer to perform a dance operation that moves the pompon in the shape of the letter "8", and the instruction image shown in FIG. 8B can instruct the performer to perform a dance operation that swings the pompon clockwise.

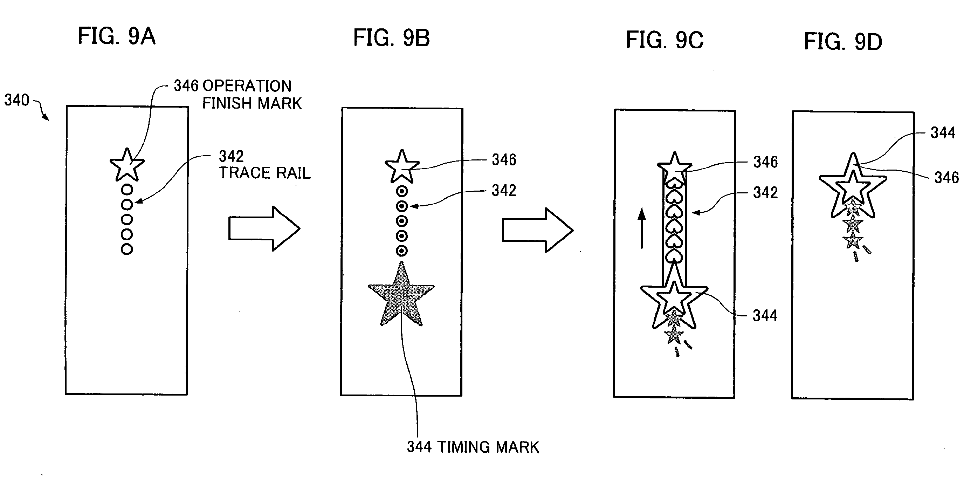

FIGS. 9A to 9D show an example of the instruction image 340 that allows the performer to be more easily notified of the moving start timing of the controller 20.

In this embodiment, the trace rail 342 (or a moving path instruction image part) and the timing mark 344 (or a timing instruction image part) are displayed as a transition image that changes from a previous notice display that is displayed before the moving start timing to a main display when the moving start timing has been reached.

Specifically, the trace rail 342 shown in FIG 9A is previously displayed by a thin dotted line two beats before the moving start timing of the controller. The trace rail 342 is displayed by a solid line (see FIG. 9B) one beat before the moving start timing, and the timing mark 344 is displayed to notify the performer that the operation will occur shortly.

When the operation timing has been reached, the trace rail 342 is displayed in a shape that instructs that the operation timing has been reached, and the timing mark 344 moves along the trace rail 342 from the movement start point to the movement finish point. The performer is thus instructed to move the controller 20 in the direction instructed by the trace rail 342 in synchronization with the movement of the timing mark 344.

When the timing mark 344 moves along the trace rail 342 (see FIG. 9D), the path sequentially disappears along with the movement of the timing mark 344, and the expiration of the moving duration is instructed when the timing mark 344 has reached the operation finish mark 346.

According to this embodiment, the performer can be appropriately notified of the moving start timing and the moving direction using the transition image that changes from the previous notice display before the moving start timing to the main display so that the performer can make preparations for moving the controller 20 in the instructed direction.

Note that the transition image may be displayed as a transition image that changes from transparent display to the main display, or may be displayed as a transition image that moves toward the display position along the depth direction while changing its transparency or size.

An appearance of the trace rail 342 that is a moving path instruction image part and an appearance of the timing mark 344 that is an instruction image part may be changed in the timing of instruction to the player.

For example, at least one of color, form, and size of the timing mark 344 that is an instruction image part may be changed so that the timing mark 344 becomes gradually more visible and has more improved production effects as the timing mark 344 comes close to the operation finish mark 346.

When the timing mark 344 moves on the trace rail 342, at least one of color, form, and size of at least one of the trace rail 342 and the timing mark 344 may be changed so that the visibility and the production effects are improved.

### 3-2: Controller movement detection/determination process

When the instruction image 340 has instructed a given movement of controller 20, the detection/determination section 110 according to this embodiment detects the actual movement of the controller 20 performed by the performer, and determines the degree of conformity of the detected movement of the controller with the movement instructed by the instruction image.

The details are described below.

### Position detection of controller 20 (first process)

In this embodiment, the moving direction and the moving start timing of the controller 20 may be calculated based on the accelerations detected by the acceleration sensor 210.

The acceleration sensor 210 according to this embodiment detects the accelerations in three axial directions (X axis, Y axis, and Z axis) in the space based on the controller.

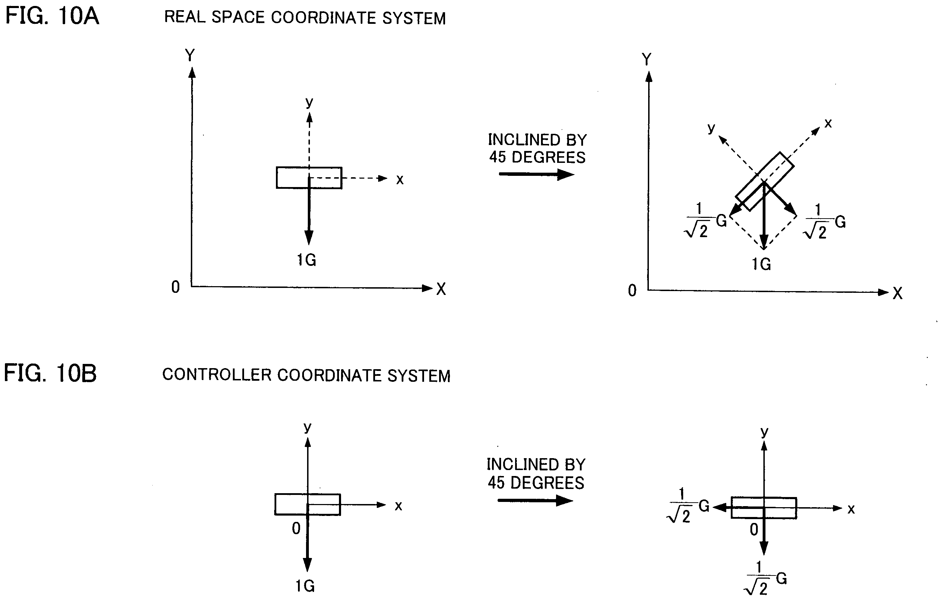

A method that calculates the gravitational accelerations of the controller 20 in two axes (XY axes) is described below for convenience with reference to FIGS. 10A and 10B. FIG. 10A is a diagram showing the gravitational acceleration in a real space coordinate system, and FIG 10B is a diagram showing the gravitational acceleration in the coordinate system of the controller 20 based on the controller 20.

For example, when the controller 20 is placed horizontally (in this case, the acceleration sensor 210 of the controller 20 is also placed horizontally) (see FIG. 10A), a gravity of 1 G is applied in the Y-axis (downward) direction (gravitational acceleration direction). As shown in FIG 10B, a gravity of 1 G is also applied in the downward direction along the y axis in the coordinate system of the controller 20. When the performer has inclined the controller 20 by 45° counterclockwise in real space coordinate system (XY axes), a gravitational acceleration of 1 G is applied in the Y-axis direction in real space coordinate system (FIG. 10A). In the controller coordinate system, the gravitational acceleration of 1 G is decomposed in the x axis direction and the y axis direction. Specifically, the x-axis component and the y-axis component are respectively 1/√2 G.

In this embodiment, the inclination of the controller 20 is thus detected utilizing the gravitational acceleration. In the example shown in FIG. 9B, when an acceleration of 1/√2 G has been detected in the negative direction along the x axis and an acceleration of 1/√2 G has been detected in the negative direction along the y axis, it is possible to detect that the controller 20 is inclined by 45° counterclockwise in real space coordinate system (XY axes). In this embodiment, since the accelerations in three axial directions can be detected, the three-dimensional inclination in real space can be calculated from the acceleration in each axial direction.

Specifically, the accelerations in three axial directions (X axis, Y axis, and Z axis) output from the acceleration sensor 210 differ between the case where the performer vertically holds the controller 20 and moves the controller 20 in a given direction (e.g., rightward) and the case where the performer horizontally holds the controller 20 and moves the controller 20 in the given direction.

Therefore, in order to accurately detect the moving direction and the like of the controller 20, it is preferable to perform a first process that detects the position of the controller 20 in real space before detecting the moving direction and the like of the controller 20.

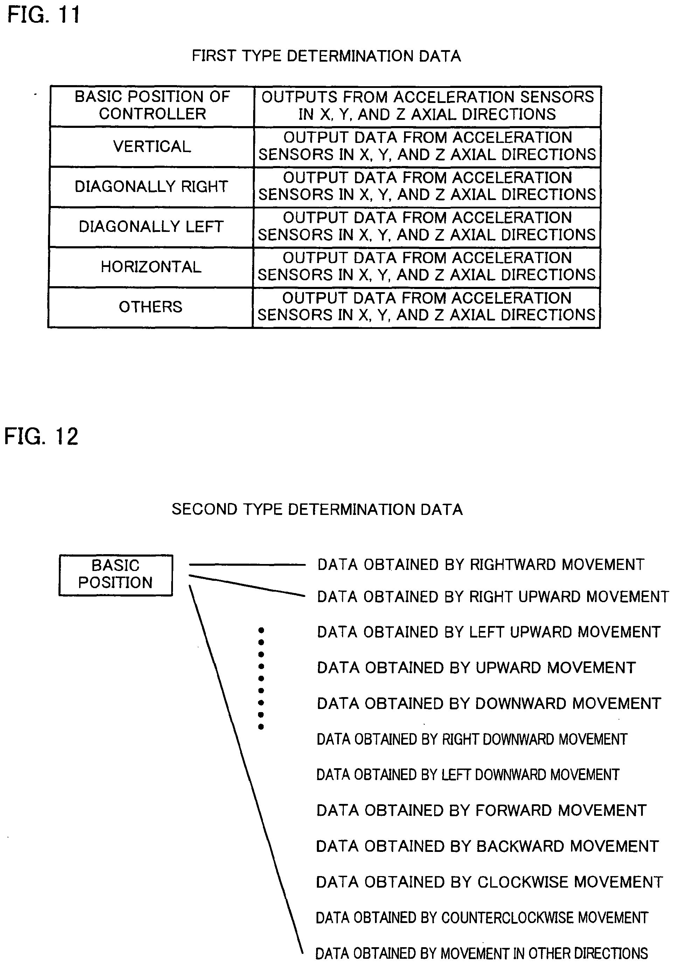

In this embodiment, a first type determination database for determining the position of the controller in real space is formed and stored in the storage area 173 of the main storage section 172, as shown in FIG. 11. Specifically, the position of the controller 20 in real space is classified into a plurality of basic positions taking variations in position when the performer holds the controller 20 into consideration. In this embodiment, the position of the controller 20 in real space is classified into a vertical position, a diagonal rightward position, a diagonal leftward position, a horizontal position, and other basic positions. The outputs of the acceleration sensor in the x, y, and z axial directions in the controller coordinate system are stored corresponding to each basic position. Therefore, the first process that determines the position of the controller 20 in real space can be performed based on the outputs of the acceleration sensor 210 in the x, y, and z axial directions.

In this case, if the basic position of the controller 20 is strictly associated with the outputs of the acceleration sensor in the x, y, and z axial directions in the controller coordinate system, the position of the controller cannot be determined when the performer holds the controller 20 in a position that differs from the basic position to some extent.

Since the simulation according to this embodiment aims at a wide range of users (i.e., from children to adult), it is necessary to form the first type determination database so that a position that differs from each basic position within a predetermined allowable range can be determined to be the corresponding basic position even if the performer holds the controller 20 in a position that differs from the basic position to some extent.

Therefore, the signals output from the acceleration sensor when the position of the controller 20 differs from a specific basic position within the allowable range (e.g., when the controller held by the performer is inclined with respect to the vertical basic position within the predetermined allowable range) are also collected as the sensor output corresponding to the basic position and stored in the database.

The data corresponding to each basic position within the predetermined allowable range is thus collected and stored in the first type determination database.

In this embodiment, the signals in the x, y, and z axial directions output from the acceleration sensor of the controller 20 when moving the controller 20 in the moving direction instructed by the instruction image 34 are compared with the first type determination database, and the basic position that coincides with the position of the controller that is moved in the moving direction instructed by the instruction image 34 is determined (first determination process).

Therefore, the position (e.g., vertical or horizontal with respect to the screen) of the controller 20 held by the performer can be determined flexibly.

### Detection and determination of movement of controller 20 (second process)

When the basic position of the controller 20 in real space has been determined by the first process, a second process that detects the movement of the controller 20 in real space including the moving direction is performed.

In this embodiment, a second type determination database shown in FIG 12 is used to perform the second process. The second type determination database is stored in the storage area 173 of the main storage section 172.

The second type determination database is generated as follows.

The signals in the x, y, and z directions output from the acceleration sensor of the controller 20 when moving the controller 20 in the direction instructed by the instruction image 340 in real space are collected corresponding to each basic position of the controller 20 shown in FIG 11.

The signals output from the acceleration sensor 210 when the controller 20 is moved in each basic position are associated with the moving direction of the controller 20 in real space to create a second type determination database.

Even if the performer moves the controller 20 held in an identical basic position in an identical direction (e.g., rightward direction), the performer may move the controller 20 in a meandering path or a curved path with respect to the instructed direction. If it is determined that the movement along such a moving path does not conform to the movement in the instructed moving direction, a situation in which a wide range of users cannot enjoy the simulation may occur.

Therefore, the signals in the x, y, and z axial directions output from the acceleration sensor 210 when moving the controller 20 in a specific basic position in the moving direction instructed by the instruction image are collected within the predetermined allowable range, and stored in the database. For example, when the performer moves the controller 20 while drawing a path that differs from the direction instructed by the instruction image 340 within the predetermined allowable range, the signals output from the acceleration sensor are collected as signals corresponding to the instructed basic position, and stored in the database.

In this embodiment, data relating to the controller 20 held in each basic position is classified corresponding to each moving direction (i.e., rightward direction, diagonally right upward direction, upward direction, downward direction, diagonally right downward direction, diagonally left downward direction, forward direction, backward direction, clockwise direction, counterclockwise direction, and other directions), and the signals in the x, y, and z axial directions output from the acceleration sensor are collected within the predetermined allowable range, and stored in the database.

The second type determination database shown in FIG 12 is generated in this manner. FIG 12 shows the database corresponding to one basic position. Note that data is similarly collected and stored corresponding to other basic positions shown in FIG. 11.

When the position of the controller 20 has been determined by the first process, data corresponding to the determined position is compared with the signals output from the acceleration sensor of the controller 20 using the second type determination database to specify the movement (e.g., the moving direction) of the controller 20.

Specifically, a process that specifies the moving direction and the moving amount per unit time of the controller 20 held in the position determined by the first process is performed in real time. The moving direction, the moving timing, and the moving duration of the controller 20 in real space are determined based on the moving direction and the moving amount per unit time of the controller 20 thus specified, and whether or not the movement coincides with the movement instructed by the instruction image 340 is evaluated.

Therefore, whether or not the performer moves the controller 20 in the instructed direction can be evaluated regardless of the position of the controller 20.

In this embodiment, the movements of the first controller 20-1 and the second controller 20-2 are individually evaluated with respect to the instructions given by the instruction images 340-1 and 340-2 shown in FIG 4.

When the movement of each of the first controller 20-1 and the second controller 20-2 has been determined to be good (i.e., the controller has been moved in the instructed direction at the instructed input timing and moved for the predetermined duration), the performer scores 500 points corresponding to each determination result (score 320). When the movements of both of the first controller 20-1 and the second controller 20-2 have been determined to be good, the performer scores 1000 points (score 320). In this case, the main dancer 310 displayed on the simulation screen operates to reproduce a dance corresponding to the operation of the performer.

When the movements of both of the first controller 20-1 and the second controller 20-2 have been determined to be good, the performer's operation may be evaluated to a larger extent as compared with the case where the movement of only one of the first controller 20-1 and the second controller 20-2 has been determined to be good. An evaluation display area 322 that evaluates the operation of the performer is provided on the simulation screen (upper right) shown in FIG. 5. Characters "COOL" are displayed when the input direction and the input timing are correct, and characters "POOR" are displayed when the input direction or timing is incorrect.

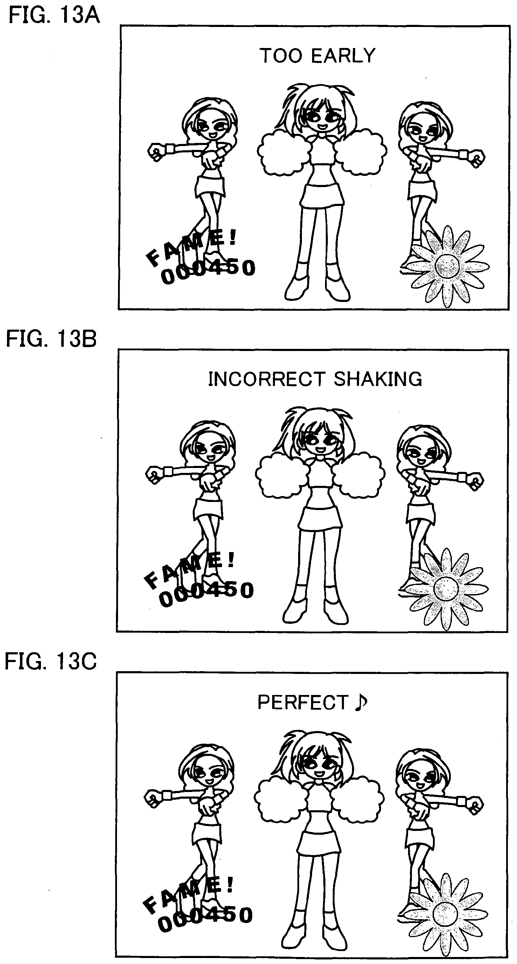

Screens shown in FIGS. 13A to 13C may be displayed based on the evaluation result.

For example, the cause of the incorrect operation of the controller 20 may be specified based on the incorrect determination result. As shown in FIGS. 13A and 13B, a screen that instructs that the input timing has been incorrect, or a screen that instructs that the controller has been moved inappropriately may be displayed.

This prompts the performer to appropriately move the controller 20 so that the performer corrects the dance and is urged to challenge a more difficult dancing simulation.

When the performer has been determined to have appropriately moved the controller 20 in accordance with the movement instructed by the instruction image, a screen that instructs characters "Perfect" is displayed (see FIG 13C). Effect sound may also be generated to liven up the simulation.

When successive movements are instructed by the instruction image, a special event is generated when the performer has successfully performed the successive movements. This improves the simulation production effect.

When the performer has moved the controller 20 in accordance with the movement instructed by the instruction image 340, the moving path of the controller 20 may be displayed near the corresponding instruction image 340. The performer can thus visually observe the degree of similarity between the movement instructed by the instruction image 340 and the actual movement of the controller 20 so that the performer can enjoy the simulation while further improving his dance skill.

### Determination moving start timing and moving duration

In this embodiment, when the movement of the controller in a predetermined direction and the moving start timing have been instructed by the instruction image 340, the first process and the second process are performed. The movement of the controller 20 is then detected, and whether or not the detected movement coincides with the instructed movement is then determined.

In this embodiment, the velocity vector (i.e., moving amount per unit time) of the controller 20 may be calculated as a composite value of the velocity vectors in the x, y, and z axis directions obtained from the acceleration sensor 210 of the controller 20. The velocity vector detected when starting the movement is small even if the performer has moved the controller 20 in the direction at the moving start timing instructed by the instruction image 340, and reaches a predetermined reference value after several frames (e.g., a frame T3 when the movement has been started in a frame T1). Therefore, a delay by predetermined frames occurs between the timing at which the controller 20 has been operated and the timing at which the operation is detected.

In this embodiment, a determination moving start timing and a determination moving duration are set taking the above-mentioned detection delay into consideration in addition to the moving start timing and the moving duration instructed by the instruction image 340 to determine the movement of the controller 20.

Specifically, the determination moving start timing is set at a timing delayed by several frames as compared with the moving start timing instructed by the instruction image 340, and the determination moving duration is set to coincide with the finish timing of the moving duration instructed by the instruction image 340 or expire after the moving duration instructed by the instruction image 340 by predetermined frames.

This eliminates a problem due to the delay in detecting the moving start timing of the controller. Therefore, the movement of the controller can be appropriately determined.

According to this embodiment, the degree of difficulty in the simulation may be set by appropriately setting the determination moving start timing and the determination moving duration.

For example, the degree of difficulty can be decreased by increasing the delay of the determination moving start timing with respect to the moving start timing instructed by the instruction image, and can be increased by decreasing the delay of the determination moving start timing with respect to the moving start timing instructed by the instruction image.

The degree of difficulty can be increased by decreasing the determination moving duration, and can be decreased by increasing the determination moving duration.

Therefore, the determination moving start timing and the moving duration may be set corresponding to the degree of difficulty selected by the performer, for example.

### 3-3: Simulation screen position pointing instruction and detection/determination process

The pointing position instruction section 104 according to this embodiment generates the pointing instruction image (pointing instruction image) that instructs the performer to point a predetermined position on the simulation screen at a given timing with the progress of the simulation.

FIGS. 6A to 6C show specific examples of the pointing instruction image 350 displayed on the simulation screen. In FIG 6A, the pointing instruction image 350 is displayed corresponding to the character on the left of the simulation screen.

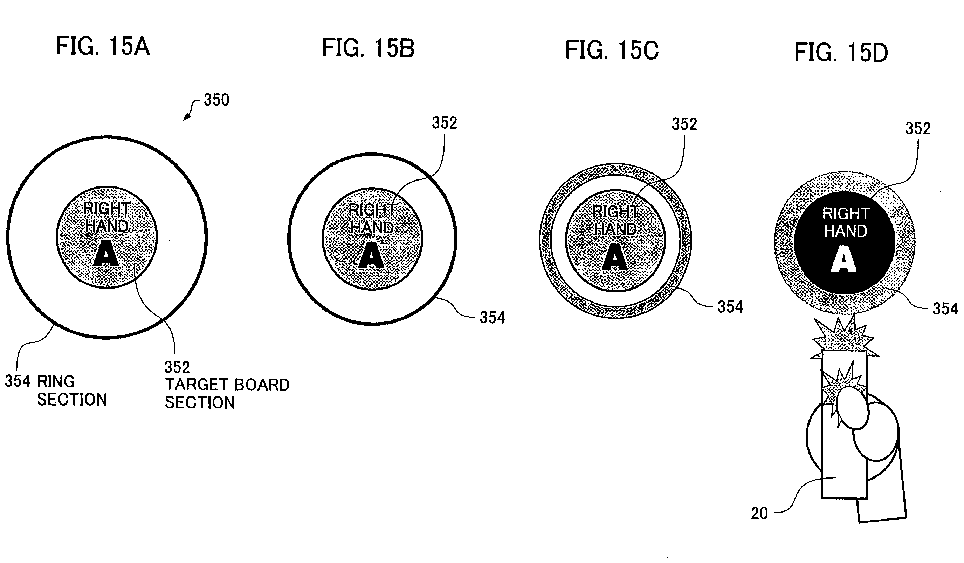

As shown in FIGS. 15A to 15D, the pointing instruction image 350 includes a target board section 352 displayed at the pointing position, and a ring section 354 displayed around the target board section 352. As shown in FIG. 15A, the ring section 354 is displayed as a large ring that encloses the target board section 352 immediately after the pointing instruction image 350 has been displayed. The ring section 354 shrinks with the lapse of time (see FIGS. 15A to 15D). As shown in FIG. 15D, the ring section 354 overlaps the target board section 352 when the pointing timing has been reached.

The performer points the controller 20 (the first controller 20-1 held with the right hand in FIGS. 6A to 6C) at the position of the target board section 352 displayed on the simulation screen within a predetermined period in accordance with the pointing timing instruction.

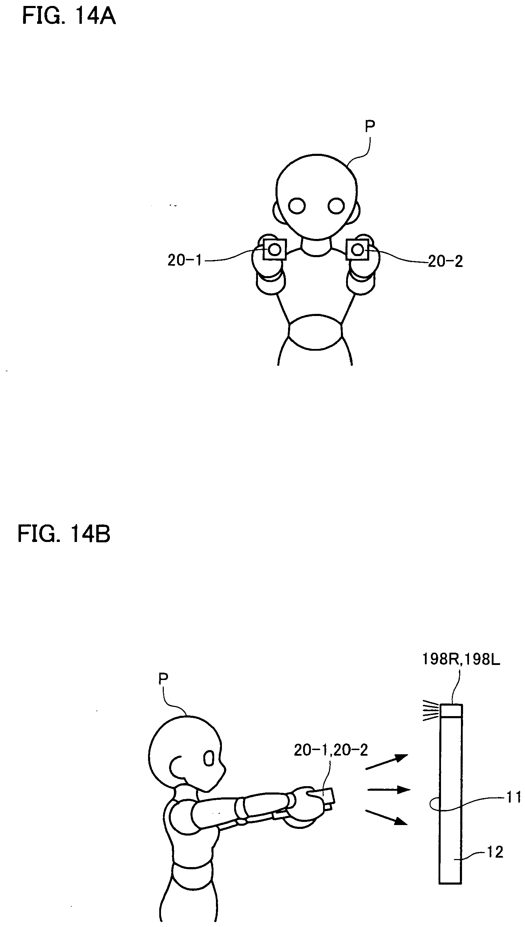

The light sources 198L and 198R are provided around the display section 12, as described above. The performer directs the imaging section 220 provided on the front side of the controller 20 toward the simulation screen to operate the controller 20 as a pointing device that points an arbitrary point on the simulation screen. FIGS. 14A and 14B show an example of a state in which the performer points the desired position on the simulation screen using the controller 20.

The detection/determination section 110 according to this embodiment determines whether or not the performer has pointed the target board section 352 instructed by the pointing instruction image 350 at the instructed timing based on a signal acquired from the imaging section 220 of the controller 20.

When the detection/determination section 110 has determined that the performer has pointed the instructed position at the instructed timing, a predetermined event (e.g., the backing dancer is raised as shown in FIG 6B) is generated, and a new pointing instruction image 350 is displayed at the center of the simulation screen, as shown in FIG. 6B.

As shown in FIG. 6B, the instruction images 340-1 and 340-2 that instruct a given movement of the controller are displayed corresponding to the new pointing instruction image 350.

In this case, when the performer has successfully pointed the target board section 352 instructed by the newly displayed pointing instruction image 350 at the instructed timing, the timing marks 344 of the instruction images 340-1 and 340-2 move along the trace rails 342 when a specific period of time has elapsed to instruct given movements of the controllers 20-1 and 20-2 for the performer.

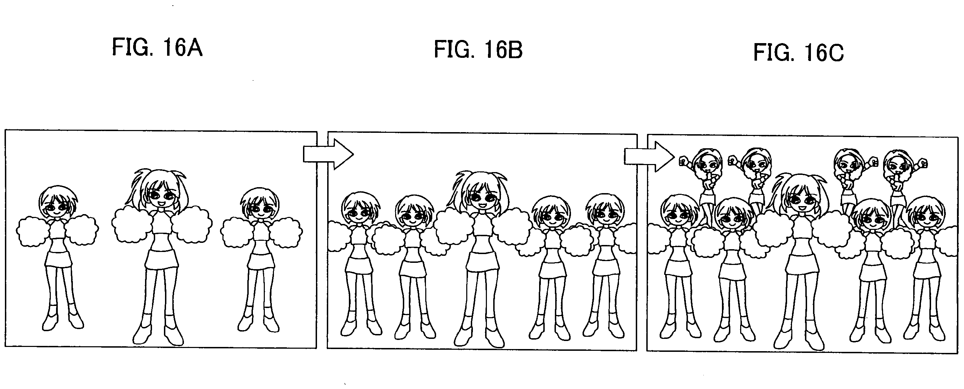

When the performer has successfully moved the controllers 20-1 and 20-2 in accordance with the instructions, a screen in which an acrobatic dance has succeeded is displayed, as shown in FIG. 6C, for example. When such successive movements have succeeded, a simulation in which the number of backing dancers appearing on the screen is successively increased (see FIGS. 16A to 16C) may be generated to increase the interest of the simulation, for example.

### 3-4: Multi-performer mode

In this embodiment, a multi-performer mode (two-performer mode or four-performer mode) can be selected when starting the simulation.

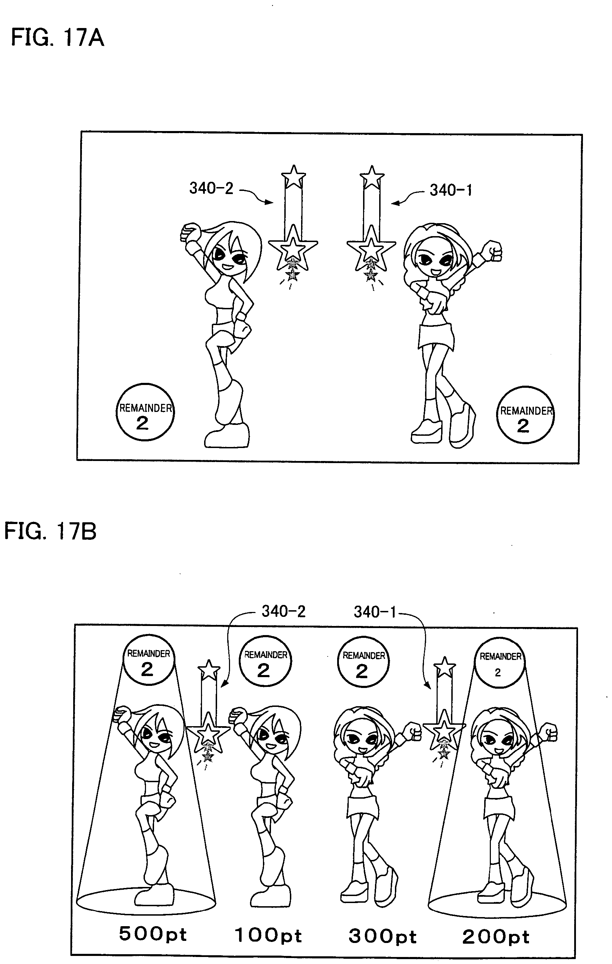

FIG. 17A shows an example of a simulation screen when a two-performer mode has been selected.

In this case, two performers hold the first controller 20-1 or the second controller 20-2. The performers operate the controllers 20-1 and 20-2 in accordance with the instructions given by the instruction images 340-1 and 340-2 shown in FIG. 17A, and compete for the dance skill.

When four controllers 20 that differ in ID can be provided, a four-performer mode shown in FIG. 17B can be selected.

Each performer holds the corresponding controller 20, and observes the instruction image 340 displayed on the simulation screen.

In this embodiment, two performers corresponding to two spotlighted dance characters are given instructions on the movement of the controller 20 using the instruction images 340-1 and 340-2.

Since the spotlighted dance character is changed with the progress of the simulation, the performer visually recognizes his turn when the dance character corresponding to the performer is spotlighted. The performer moves the controller in accordance with the movement instructed by the corresponding instruction image 340 to compete for the dance skill.

This embodiment has been described taking an example in which one performer utilizes one controller when performing a multi-performer mode. Note that one performer may utilize two controllers, if necessary.

### 4. Process according to this embodiment

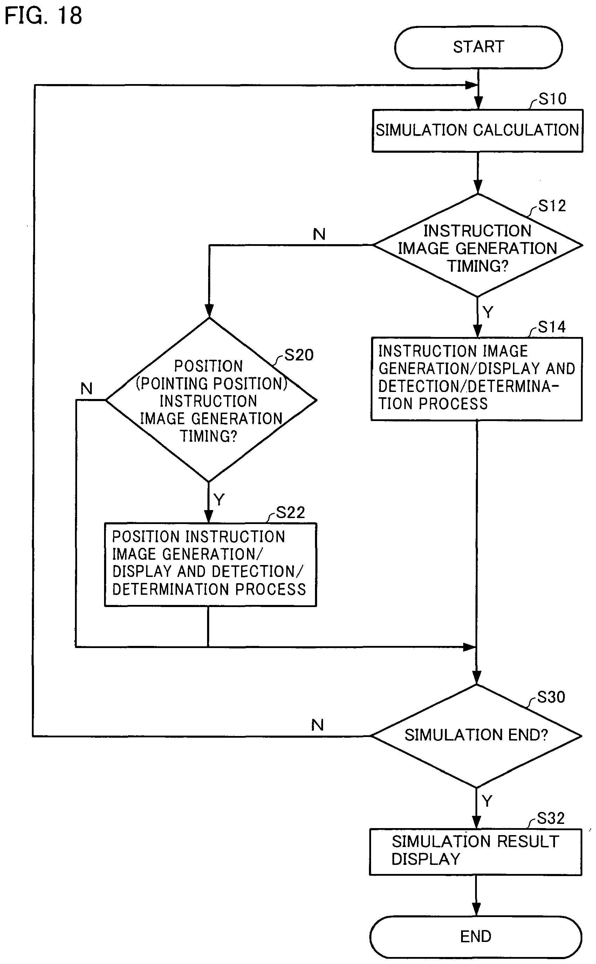

An example of the process according to this embodiment is described below with reference to flowcharts shown in FIGS. 18 to 21.

FIG. 18 shows an operation example when applying this embodiment to a dancing simulation system.

When the performer has selected a single-performer mode or a multi-performer mode and started the simulation, the simulation calculation starts (step S10).

A cheerleading dance simulation screen is displayed on the display section 12, and background music (dance music) corresponding to the dance is output.

In this case, instructions may be given to the performer as to the position of the controller 20. For example, instructions may be given to the performer P as to whether to hold the controller 20 vertically or horizontally.

When the dance characters 310 and 312 displayed on the simulation screen start to dance, as shown in FIG 5, the instruction images 340-1 and 340-2 that instruct the movements of the controllers 20-1 and 20-2 are displayed at a given timing with the progress of the simulation. The detection/determination process that determines whether or not the performer has moved each of the controllers 20-1 and 20-2 in accordance with the instructions given by the instruction images 340-1 and 340-2 is then performed (steps S12 and S14).

When the display timing of the pointing instruction image 350 shown in FIGS. 6A to 6C has been reached, the pointing instruction image 350 is displayed on the simulation screen, as shown in FIGS. 6A to 6C, and the detection/determination process that determines whether or not the performer has pointed the controller 20 at the area of the target board section 352 instructed by the pointing instruction image 350 at the instructed timing is performed (steps S20 and S22).

The above-described process is repeated until the simulation ends (step S30). The final simulation result is displayed when the simulation ends (step S32).

In this embodiment, the result display event based on the determination result (e.g., score calculation or screen display shown in FIGS. 17A and 17B) occurs corresponding to each determination result of the detection/determination process performed in the steps S14 and S22. In a step S32, the total value (total score) of each determination result of the detection/determination process performed in the steps S14 and S22 is calculated and displayed as the final simulation result.

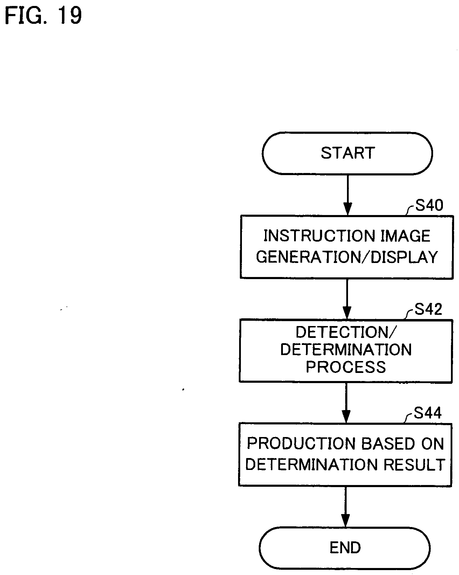

FIG. 19 shows a specific example of the process performed in the step S14 shown in FIG 18.

When the generation timing of the instruction image 340 has been reached with the progress of the simulation, the instruction images 340-1 and 340-2 are generated and displayed on the simulation screen (step S40), and whether or not the performer has accurately moved the controllers 20-1 and 20-2 in real space in accordance with the instructions given by the instruction images 340-1 and 340-2 is determined (step S42).

The score 320 is updated based on the determination result, and characters "COOL" or "POOR" are displayed in the evaluation display area 322.

The production image shown in FIGS. 13A to 13C is displayed corresponding to the evaluation result (step S44).

The production image shown in FIGS. 13A to 13C may be displayed only in a predetermined scene during the simulation. The production image shown in FIGS. 13A to 13C may be displayed only when the performer or the operator has performed the production screen display setting before starting the simulation.

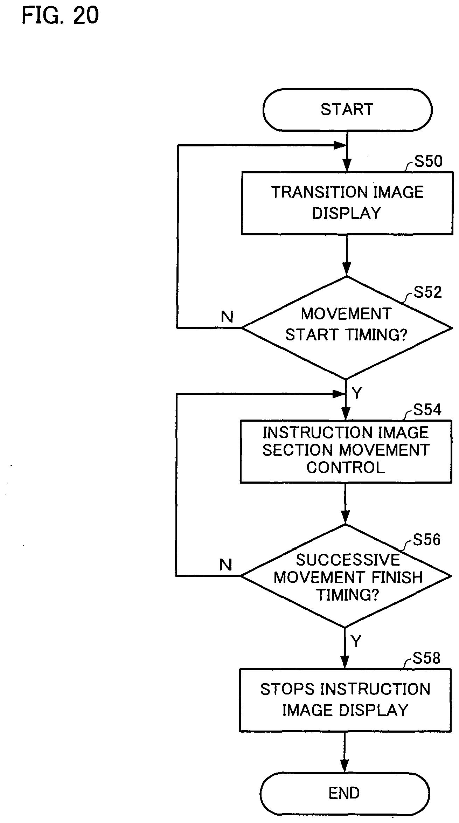

FIG. 20 shows a specific example of the process performed in the step S40 shown in FIG. 19.

When the display timing of the instruction image 340 has been reached during the simulation, the transition image shown in FIGS. 9A and 9B is displayed before the moving start timing of the controller 20. Therefore, the performer can determine and prepare for the moving direction and the moving start timing of the controller before the moving start timing of the controller 20.

When the moving start timing of the controller has been reached (step S52), the timing mark 344 is moved toward the operation finish mark 346 along the trace rail 342, as shown in FIG. 9C.

The performer moves the controller 20 in the direction instructed by the trace rail 342 at the moving timing of the timing mark 344. The performer successively moves the controller 20 in accordance with the instructions until the timing mark 344 reaches the operation finish mark 346.

When the successive movement finish timing has been reached (see FIG. 9D) (step S56), the display of the instruction image 340 is finished (step S58).

The above display control process makes it possible to give visual instructions to the performer as to the movement of the controller in the desired direction at an appropriate timing.

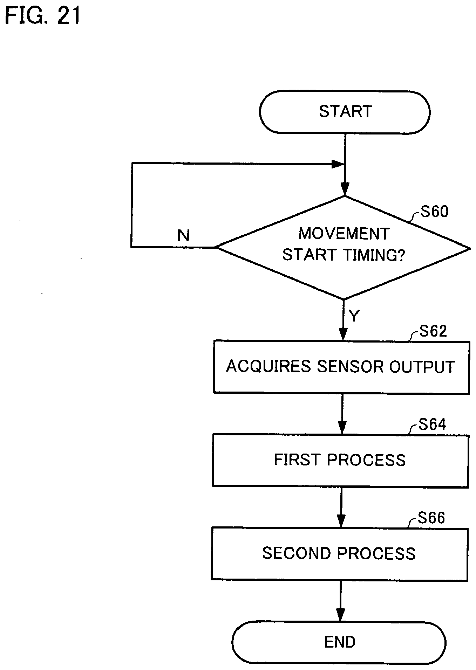

FIG. 21 shows a specific example of the detection/determination process performed in the step S42 shown in FIG. 19.

When the moving start timing of the controller instructed by the instruction image 340 has been reached (FIG. 9C) (step S60), signals output from the acceleration sensor of the controller 20 are acquired (step S62), and the above-mentioned first process and second process are performed (steps S64 and S66).

Specifically, the first process that determines the basic position which corresponds to the position of the controller 20 is performed, and the second process that determines the direction and the movement of the controller 20 and determines the degree of conformity with the movement instructed by the instruction image 340 is then performed.

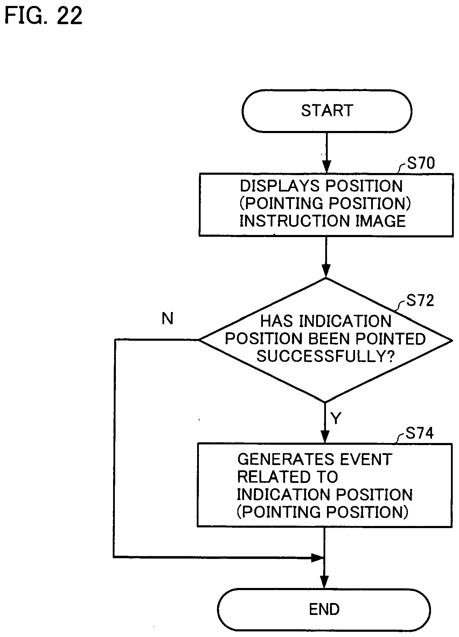

FIG. 22 shows a specific example of the process performed in the step S22 shown in FIG 18.

When the display timing of the pointing instruction image 350 shown in FIGS. 6A to 6C has been reached during the simulation, the pointing instruction image 350 is displayed at a given position of the simulation screen (step S70).

As shown in FIGS. 15A to 15D, the pointing instruction image 350 includes the target board section 352 that instructs the pointing area and the ring section 354 that shrinks toward the target board section 352. A timing at which the ring section 354 has shrunk to enclose the target board section 352 (i.e., the timing shown in FIG. 15D) is the timing at which the performer should point the controller 20 at the position instructed by the target board section 352.

Whether or not the performer has successfully pointed the controller 20 at the instructed position is determined (step S72). When it has been determined that the performer has successfully pointed the controller 20 at the instructed position, an event corresponding to the pointing instruction is generated (step S74).

In the example shown in FIG 6A, an event in which the pointed backing dancer lifts the adjacent backing dancer is generated. In the example shown in FIG. 6B, the instruction images 340-1 and 340-2 are displayed corresponding to the display position of the pointing instruction image 350. An operation that moves the controllers 20-1 and 20-2 in the direction instructed by the instruction images 340-1 and 340-2 is instructed after the performer has successfully pointed the controller 20 at the instructed position, and the completion of an acrobatic dance shown in FIG. 6C is displayed when the performer has successfully performed the successive operations.

Note that the invention is not limited to the above embodiments. Various modifications and variations may be made without departing from the scope of the invention.

For example, although the above embodiments have been described taking an example in which the invention is applied to a dancing simulation, the invention is not limited thereto. The invention may be suitably applied to other applications, such as giving aerobic or exercise instructions to a student who holds a controller so that the student can perform appropriate aerobics or exercise and determining the result.

Although the above embodiments have been described taking an example in which the timing mark 344 is moved along the trace rail 342 as the instruction image 340, the invention is not limited thereto. An arbitrary instruction image may be used insofar as a given movement of the controller can be instructed. For example, the color of a given path displayed by the trace rail 342 may be changed corresponding to the moving timing and the operation duration of the controller. Alternatively, the moving direction may be displayed using an arrow or the like. The operation start timing may be instructed by a countdown display, and the operation duration may also be instructed by a countdown display.

Although only some embodiments of this invention have been described in detail above, those skilled in the art will readily appreciate that many modifications are possible in the embodiments without materially departing from the novel teachings and advantages of this invention. Accordingly, all such modifications are intended to be included within the scope of the invention.

## Claims

1. An input instruction device for a simulation system, comprising:
an instruction image generation section (102) adapted to generate an instruction image (340) that instructs a given movement of a controller (20) including a physical quantity sensor (210), wherein the physical quantity sensor (210) is an acceleration sensor which is adapted to detect a physical quantity from which a moving direction and a moving amount per unit time can be derived;
a detection/determination section (110) adapted to acquire a signal from the physical quantity sensor (210) included in the controller (20), to detect the movement of the controller (20), wherein
the instruction image generation section (102) is adapted to generate the instruction image (340) that instructs a moving direction, a moving start timing, a moving duration of the controller (20) as the movement; and
the detection/determination section (110) is adapted to acquire the signal from the physical quantity sensor (210), to detect an inclination of the controller (20) and then the moving direction, the moving start timing, and the moving duration of the controller (20) and to determine the degree of conformity of the detected movement of the controller (20) with the movement instructed by the instruction image (340), by determining the degree of conformity of the detected moving direction, moving start timing, and moving duration of the controller (20) with the instructions instructed by the instruction image (340) by using the detection results,
wherein the detection/determination section (110) is adapted to perform a first process that compares the signal output from the physical quantity sensor (210) when moving the controller (20) with a first type determination database and to determine within a predetermined allowable range the inclination of the controller (20) that is moved, the first type determination database being related to the signal output from the physical quantity sensor (210) when moving the controller (20) in different inclinations in the moving direction instructed by the instruction image (340) and the first type determination database being used to determine the inclination of the controller (20), and
wherein the detection/determination section (110) is adapted to perform a second process that compares the signal output from the physical quantity sensor (210) when moving the controller (20) in the inclination determined by the first process in the moving direction instructed by the instruction image (340) with a second type determination database to specify the movement of the controller (20) including at least the moving direction, and to determine the degree of conformity of the specified movement with the instructed movement, the second type determination database being related to the inclination of the controller (20) determined based on the first type determination database, and being used to determine the movement the controller (20) including at least the moving direction from the signal output from the physical quantity sensor (210) when moving the controller in the moving direction instructed by the instruction image (340).

2. The input instruction device for a simulation system as defined in claim 1, the input instruction device further comprising:
a simulation calculation section (112) which includes a subsection adapted to display a position instruction image that instructs to point at a predetermined position of the simulation screen at a given timing during the simulation,
wherein the simulation calculation section (112) is adapted to generate an event related to a pointing at the predetermined position when the pointing at the predetermined position has been detected at the timing, and
wherein the instruction image generation section (102) is adapted to generate the instruction image that instructs a given movement of the controller related to the predetermined pointed position of the simulation screen as the event related to the pointing at the predetermined position.

3. The input instruction device for a simulation system as defined in claim 1 or 2,
wherein the instruction image (340) includes:
a moving path instruction image part that instructs a moving direction of the controller (20) along a given path; and
a timing instruction image part that instructs a moving timing of the controller (20) along the path,
the instruction image (340) being updated according to a change in content of instruction.

4. The input instruction device for a simulation system as defined in claim 3,
wherein the timing instruction image part moves from a movement start instruction position to a movement finish instruction position along the moving path instruction image part to instruct a moving start timing and a moving duration of the controller (20) along the instructed path.

5. The input instruction device for a simulation system as defined in claim 3 or 4,
wherein at least one of the moving path instruction image part and the timing instruction image part is displayed as a transition image that changes from a previous notice display that is displayed before the moving start timing to a main display when the moving start timing is reached.

6. The input instruction device for a simulation system as defined in any one of claims 3 to 5, wherein:
the instruction image (340) is displayed as a set of moving path instruction image parts that instruct a continuous moving path by combining a plurality of the moving path instruction image parts; and
the timing instruction image part moves along the continuously combined moving path instruction image parts to instruct the moving timing of the controller (20) along a moving path instructed by each of the moving path instruction image parts.

7. The input instruction device for a simulation systems as defined in any one of claims 1 to 6,
wherein the detection/determination section (110) is adapted to acquire the signal from the physical quantity sensor (210), and to detect a timing and a duration when the moving amount of the controller (20) per unit time exceeds a given value as the moving start timing and the moving duration of the controller (20); and
wherein the detection/determination section (110) is adapted to determine the degree of conformity of the detected moving start timing and moving duration of the controller (20) with a moving start timing and determination moving duration for determination related to the instructed moving start timing and instructed moving duration instructed by the instruction image (340) when the detection/determination section has determined that the detected moving direction of the controller (20) coincides with the instructed moving direction instructed by the instruction image (340).

8. The input instruction device for a simulation system as defined in any one of claims 1 to 7,
wherein the instruction image generation section (102) is adapted to generate the instruction image (340) that individually instructs a given movement for at least two controllers (20) each having a physical quantity sensor (210).

9. The input instruction device for a simulation system as defined in any one of claims 2 to 8, wherein
the simulation calculation section (112) is adapted to instruct a performer to perform a dance action accompanying the movement of the controller (20), to generate a simulation screen including a character that performs a dance related to the instructed dance action based on an input from the controller (20), and to generate a dance background music signal,
wherein the instruction image generation section (102) is adapted to generate the instruction image (340) that instructs a given movement of the controller (20) in the simulation screen.

10. The input instruction device for a simulation system as defined in claim 9,
the simulation calculation section (112) including a subsection adapted to perform simulation production related to a result of determination for the degree of conformity by the detection/determination section (110).

11. The input instruction device for a simulation system as defined in claim 9 or 10,
the simulation calculation section (112) including a subsection adapted to specify a cause of an incorrect operation of the controller (20) and to notify the performer of the cause of the incorrect operation based on a result of determination for the degree of conformity by the detection/determination section (110).

12. The input instruction device for a simulation system as defined in any one of claims 9 to 11,
the simulation calculation section (112) including a subsection adapted to trace the moving path of the controller (20) detected by the detection/determination section (110) in the simulation screen based on a given condition.

13. A dancing simulation system using the input instruction device for a simulation system as defined in any one of claims 1 to 12.

14. An input instruction method for a simulation system comprising:
a step of generating an instruction image (340) that instructs a given movement of a controller (20) including a physical quantity sensor (210); said given movement including a moving direction, a moving start timing, and a moving duration of the controller as the movement, wherein the physical quantity sensor is an acceleration sensor and is capable of detecting a physical quantity from which a moving direction and a moving amount per unit time can be derived; and
a step of acquiring a signal from the physical quantity sensor (210) included in the controller (20); a step of detecting an inclination of the controller (20) and then the moving direction, the moving start timing, and the moving duration of the controller (20); and step of determining the degree of conformity of the detected moving direction, moving start timing, and moving duration of the controller (20) with the movement instructed by the instruction image (340), by using the detection results, further comprising
a step of performing a first process that compares the signal output from the physical quantity sensor (210) when moving the controller (20) with a first type determination database and to determine within a predetermined allowable range the inclination of the controller (20) that is moved, the first type determination database being related to the signal output from the physical quantity sensor (210) when moving the controller (20) in different inclinations in the moving direction instructed by the instruction image (340) and the first type determination database being used to determine the inclination of the controller (20), and
a step of performing a second process that compares the signal output from the physical quantity sensor (210) when moving the controller (20) in the inclination determined by the first process in the moving direction instructed by the instruction image (340) with a second type determination database to specify the movement of the controller (20) including at least the moving direction, and to determine the degree of conformity of the specified movement with the instructed movement, the second type determination database being related to the inclination of the controller (20) determined based on the first type determination database, and being used to determine the movement the controller (20) including at least the moving direction from the signal output from the physical quantity sensor (210) when moving the controller in the moving direction instructed by the instruction image (340).

## Patentansprüche

1. Eingabeanweisungsvorrichtung für ein Simulationssystem, mit:
einem Anweisungsbilderzeugungsabschnitt (102), der dazu angepasst ist, ein Anweisungsbild (340) zu erzeugen, das eine gegebene Bewegung eines Controllers (20) mit einem Sensor für eine physikalische Größe (210) anweist, wobei der Sensor für eine physikalische Größe (210) ein Beschleunigungssensor ist, der dazu angepasst ist, eine physikalische Größe zu detektieren, anhand der eine Bewegungsrichtung und ein Bewegungsausmaß pro Zeiteinheit abgeleitet werden können;
einem Detektions-/Bestimmungsabschnitt (110), der dazu angepasst ist, ein Signal von dem Sensor für eine physikalische Größe (210) in dem Controller (20) zu erfassen, zum Detektieren der Bewegung des Controllers (20), bei der
der Anweisungsbilderzeugungsabschnitt (102) dazu angepasst ist, das Anweisungsbild (340) zu erzeugen, das eine Bewegungsrichtung, einen Bewegungsstartzeitpunkt, eine Bewegungsdauer des Controllers (20) als die Bewegung anweist; und
der Detektions-/Bestimmungsabschnitt (110) dazu angepasst ist, das Signal von dem Sensor für eine physikalische Größe (210) zu erfassen, eine Neigung des Controllers (20) und danach die Bewegungsrichtung, den Bewegungsstartzeitpunkt und die Bewegungsdauer des Controllers (20) zu detektieren und den Grad einer Übereinstimmung der detektierten Bewegung des Controllers (20) mit der durch das Anweisungsbild (340) angewiesenen Bewegung zu bestimmen, indem unter Verwendung der Detektionsresultate der Grad einer Übereinstimmung der detektierten Bewegungsrichtung, des detektierten Startzeitpunkts und der detektierten Bewegungsdauer des Controllers (20) mit den Anweisungen, die durch das Anweisungsbild (340) angewiesen werden, bestimmt wird,
wobei der Detektions-/Bestimmungsabschnitt (110) dazu angepasst ist, einen ersten Prozess durchzuführen, der das Signal, das von dem Sensor für eine physikalische Größe (210) ausgegeben wird, wenn der Controller (20) bewegt wird, mit einer ersten Typbestimmungsdatenbank vergleicht, und innerhalb eines vorbestimmten erlaubten Bereichs die Neigung des Controllers (20), der bewegt wird, zu bestimmen, wobei die erste Typbestimmungsdatenbank mit dem von dem Sensor für eine physikalische Größe (210) ausgegebenen Signal, wenn der Controller (20) mit unterschiedlichen Neigungen in der Bewegungsrichtung, die durch das Anweisungsbild (340) angewiesen wird, bewegt wird, in Beziehung steht und die erste Typbestimmungsdatenbank zum Bestimmen der Neigung des Controllers (20) verwendet wird, und
wobei der Detektions-/Bestimmungsabschnitt (110) dazu angepasst ist, einen zweiten Prozess durchzuführen, der das von dem Sensor für eine physikalische Größe (210) beim Bewegen des Controllers (20) mit der durch den ersten Prozess bestimmten Neigung in der durch das Anweisungsbild (340) angewiesenen Bewegungsrichtung ausgegebene Signal mit einer zweiten Typbestimmungsdatenbank vergleicht, so dass die Bewegung des Controllers (20) mit mindestens der Bewegungsrichtung spezifiziert wird, und den Grad einer Übereinstimmung der spezifizierten Bewegung mit der angewiesenen Bewegung zu bestimmen, wobei die zweite Typbestimmungsdatenbank mit der Neigung des Controllers (20), die basierend auf der ersten Typbestimmungsdatenbank bestimmt wird, in Beziehung steht und zum Bestimmen der Bewegung des Controllers (20), einschließlich mindestens der Bewegungsrichtung, anhand des von dem Sensor für eine physikalische Größe (210) beim Bewegen des Controllers in der durch das Anweisungsbild (340) angewiesenen Bewegungsrichtung ausgegebenen Signals verwendet wird.

2. Eingabeanweisungsvorrichtung für ein Simulationssystem nach Anspruch 1, bei der die Eingabeanweisungsvorrichtung ferner aufweist:
einen Simulationsberechnungsabschnitt (112), der einen Unterabschnitt aufweist, der dazu angepasst ist, ein Positionsanweisungsbild anzuzeigen, das eine Anweisung zum Zeigen auf eine vorbestimmte Position des Simulationsschirms zu einem gegebenen Zeitpunkt während der Simulation enthält,
bei der der Simulationsberechnungsabschnitt (112) dazu angepasst ist, ein Ereignis in Bezug auf ein Zeigen auf die vorbestimmte Position zu erzeugen, wenn das Zeigen auf die vorbestimmte Position zu dem Zeitpunkt detektiert worden ist, und
bei der der Anweisungsbilderzeugungsabschnitt (102) dazu angepasst ist, das Anweisungsbild, das eine gegebene Bewegung des Controllers in Bezug auf die vorbestimmte Zeigeposition des Simulationsschirms anweist, als das Ereignis in Bezug auf das Zeigen auf die vorbestimmte Position zu erzeugen.

3. Eingabeanweisungsvorrichtung für ein Simulationssystem nach Anspruch 1 oder 2,
bei dem das Anweisungsbild (340) aufweist:
einen Bewegungspfadanweisungsbildteil, der eine Bewegungsrichtung des Controllers (20) entlang des gegebenen Pfads anweist; und
einen Zeitanweisungsbildteil, der einen Bewegungszeitpunkt des Controllers (20) entlang des Pfads anweist,
wobei das Anweisungsbild (340) gemäß einer Änderung eines Inhalts einer Anweisung aktualisiert wird.

4. Eingabeanweisungsvorrichtung für ein Simulationssystem nach Anspruch 3,
bei dem sich der Zeitanweisungsbildteil entlang des Bewegungspfadanweisungsbildteils von einer Bewegungsstartanweisungsposition zu einer Bewegungsendeanweisungsposition bewegt, zum Anweisen eines Bewegungsstartzeitpunkts und einer Bewegungsdauer des Controllers (20) entlang des angewiesenen Pfads.

5. Eingabeanweisungsvorrichtung für ein Simulationssystem nach Anspruch 3 oder 4,
bei dem mindestens einer von dem Bewegungspfadanweisungsbildteil und dem Zeitanweisungsbildteil als ein Übergangsbild angezeigt wird, das sich von einer Vormitteilungsanzeige, die vor dem Bewegungsstartzeitpunkt angezeigt wird, zu einer Hauptanzeige ändert, wenn der Bewegungsstartzeitpunkt erreicht wird.

6. Bewegungsanweisungsvorrichtung für ein Simulationssystem nach einem der Ansprüche 3 bis 5, bei der:
das Anweisungsbild (340) als ein Satz von Bewegungspfadanweisungsbildteilen angezeigt wird, die einen kontinuierlichen Bewegungspfad durch Kombinieren mehrerer Bewegungspfadanweisungsbildteile anweisen; und
sich der Zeitanweisungsbildteil zum Anweisen des Bewegungszeitpunkts des Controllers (20) entlang eines Bewegungspfads, der durch die jeweiligen Bewegungspfadanweisungsbildteile angewiesen wird, entlang der kontinuierlich kombinierten Bewegungspfadanweisungsbildteile bewegt.

7. Eingabeanweisungsvorrichtung für ein Simulationssystem nach einem der Ansprüche 1 bis 6,
bei der der Detektions-/Bestimmungsabschnitt (110) dazu angepasst ist, das Signal von dem Sensor für eine physikalische Größe (210) zu erfassen und einen Zeitpunkt und eine Dauer, wenn das Bewegungsausmaß des Controllers (20) pro Zeiteinheit einen gegebenen Wert überschreitet, als den Bewegungsstartzeitpunkt und die Bewegungsdauer des Controllers (20) zu detektieren; und
bei der der Detektions-/Bestimmungsabschnitt (110) dazu angepasst ist, den Grad einer Übereinstimmung des detektierten Bewegungsstartzeitpunkts und der detektierten Bewegungsdauer des Controllers (20) mit einem Bewegungsstartzeitpunkt und einer Bestimmungsbewegungsdauer für eine Bestimmung in Bezug auf den angewiesenen Bewegungsstartzeitpunkt und die angewiesene Bewegungsdauer, die durch das Anweisungsbild (340) angewiesen werden, zu bestimmen, wenn der Detektions-/Bestimmungsabschnitt bestimmt hat, dass die detektierte Bewegungsrichtung des Controllers (20) mit der durch das Anweisungsbild (340) angewiesenen Bewegungsrichtung übereinstimmt.

8. Eingabeanweisungsvorrichtung für ein Simulationssystem nach einem der Ansprüche 1 bis 7,
bei der der Anweisungsbilderzeugungsabschnitt (102) dazu angepasst ist, das Anweisungsbild (340) zu erzeugen, das eine gegebene Bewegung für mindestens zwei Controller (20), die jeweils einen Sensor für eine physikalische Größe (210) aufweisen, einzeln anweist.

9. Eingabeanweisungsvorrichtung für ein Simulationssystem nach einem der Ansprüche 2 bis 8, bei der
der Simulationsberechnungsabschnitt (112) dazu angepasst ist, einen Darsteller anzuweisen, in Verbindung mit der Bewegung des Controllers (20) eine Tanzaktion durchzuführen, einen Simulationsschirm mit einem Charakter, der einen Tanz in Bezug auf die angewiesene Tanzaktion basierend auf einer Eingabe von dem Controller (20) durchführt, zu erzeugen und ein Tanzhintergrundmusiksignal zu erzeugen,
wobei der Anweisungsbilderzeugungsabschnitt (112) dazu angepasst ist, das Anweisungsbild (340) zu erzeugen, das eine gegebene Bewegung des Controllers (20) in dem Simulationsschirm anweist.

10. Eingabeanweisungsvorrichtung für ein Simulationssystem nach Anspruch 9,
bei der der Simulationsberechnungsabschnitt (112) einen Unterabschnitt aufweist, der zum Durchführen einer Simulationsproduktion in Bezug auf ein Resultat einer Bestimmung hinsichtlich des Grads einer Übereinstimmung durch den Detektions-/Bestimmungsabschnitt (110) angepasst ist.

11. Eingabeanweisungsvorrichtung für ein Simulationssystem nach Anspruch 9 oder 10,
bei der der Simulationsberechnungsabschnitt (112) einen Unterabschnitt aufweist, der dazu angepasst ist, eine Ursache einer falschen Bedienung des Controllers (20) zu spezifizieren und dem Darsteller die Ursache der falschen Bedienung mitzuteilen, basierend auf einem Resultat einer Bestimmung hinsichtlich des Grads der Übereinstimmung durch den Detektions-/Bestimmungsabschnitt (110).

12. Eingabeanweisungsvorrichtung für ein Simulationssystem nach einem der Ansprüche 9 bis 11,
bei der der Simulationsberechnungsabschnitt (112) einen Unterabschnitt aufweist, der dazu angepasst ist, den Bewegungspfad des Controllers (20), der durch den Detektions-/Bestimmungsabschnitt (110) detektiert wird, in dem Simulationsschirm basierend auf einer gegebenen Bedingung zu verfolgen.

13. Tanzsimulationssystem, das die Eingabeanweisungsvorrichtung für ein Simulationssystem nach einem der Ansprüche 1 bis 12 verwendet.

14. Eingabeanweisungsverfahren für ein Simulationssystem, mit:
einem Schritt zum Erzeugen eines Anweisungsbilds (340), das eine gegebene Bewegung eines Controllers (20) mit einem Sensor für eine physikalische Größe (210) anweist; wobei die gegebene Bewegung eine Bewegungsrichtung, einen Bewegungsstartzeitpunkt und eine Bewegungsdauer des Controllers als die Bewegung aufweist, wobei der Sensor für eine physikalische Größe ein Beschleunigungssensor ist und dazu in der Lage ist, eine physikalische Größe zu detektieren, anhand der eine Bewegungsrichtung und ein Bewegungsausmaß pro Zeiteinheit abgeleitet werden können; und
einem Schritt zum Erfassen eines Signals von dem Sensor für eine physikalische Größe (210) in dem Controller (20); einem Schritt zum Detektieren einer Neigung des Controllers (20) und danach der Bewegungsrichtung, des Bewegungsstartzeitpunkts und der Bewegungsrichtung des Controllers (20); und einem Schritt zum Bestimmen des Grads einer Übereinstimmung der detektierten Bewegungsrichtung, des detektierten Bewegungsstartzeitpunkts und der detektierten Bewegungsdauer des Controllers (20) mit der durch das Anweisungsbild (340) angewiesenen Bewegung unter Verwendung der Detektionsresultate, ferner mit
einem Schritt zum Durchführen eines ersten Prozesses, der das Signal, das von dem Sensor für eine physikalische Größe (210) ausgegeben wird, wenn der Controller (20) bewegt wird, mit einer ersten Typbestimmungsdatenbank vergleicht, und zum Bestimmen der Neigung des Controllers (20), der bewegt wird, innerhalb eines vorbestimmten erlaubten Bereichs, wobei die erste Typbestimmungsdatenbank mit dem von dem Sensor für eine physikalische Größe (210) ausgegebenen Signal, wenn der Controller (20) mit unterschiedlichen Neigungen in der Bewegungsrichtung, die durch das Anweisungsbild (340) angewiesen wird, bewegt wird, in Beziehung steht und die erste Typbestimmungsdatenbank zum Bestimmen der Neigung des Controllers (20) verwendet wird, und
einem Schritt zum Durchführen eines zweiten Prozesses, der das von dem Sensor für eine physikalische Größe (210) beim Bewegen des Controllers (20) mit der durch den ersten Prozess bestimmten Neigung in der durch das Anweisungsbild (340) angewiesenen Bewegungsrichtung ausgegebene Signal mit einer zweiten Typbestimmungsdatenbank vergleicht, so dass die Bewegung des Controllers (20) mit mindestens der Bewegungsrichtung spezifiziert wird, und zum Bestimmen des Grads einer Übereinstimmung der spezifizierten Bewegung mit der angewiesenen Bewegung, wobei die zweite Typbestimmungsdatenbank mit der Neigung des Controllers (20), die basierend auf der ersten Typbestimmungsdatenbank bestimmt wird, in Beziehung steht und zum Bestimmen der Bewegung des Controllers (20), einschließlich mindestens der Bewegungsrichtung, anhand des von dem Sensor für eine physikalische Größe (210) beim Bewegen des Controllers in der durch das Anweisungsbild (340) angewiesenen Bewegungsrichtung ausgegebenen Signals verwendet wird.

## Revendications

1. Dispositif d'instruction d'entrées pour un système de simulation, comprenant :
une section de génération d'image d'instruction (102) adaptée pour générer une image d'instruction (340) qui commande un mouvement donné d'un contrôleur (20) comprenant un capteur de grandeur physique (210), dans lequel le capteur de grandeur physique (210) est un capteur d'accélération qui est adapté pour détecter une grandeur physique dont une direction de déplacement et une quantité de déplacement par unité de temps peuvent être dérivées ;
une section de détection/détermination (110) adaptée pour acquérir un signal provenant du capteur de grandeur physique (210) inclus dans le contrôleur (20), pour détecter le mouvement du contrôleur (20), où
la section de génération d'image d'instruction (102) est adaptée pour générer l'image d'instruction (340) qui commande une direction de déplacement, un moment de démarrage de déplacement, une durée de déplacement du contrôleur (20) en tant que mouvement ; et
la section de détection/détermination (110) est adaptée pour acquérir le signal à partir du capteur de grandeur physique (210), pour détecter une inclinaison du contrôleur (20) et ensuite la direction de déplacement, le moment de démarrage de déplacement et la durée de déplacement du contrôleur (20) et pour déterminer le degré de conformité du mouvement détecté du contrôleur (20) avec le mouvement commandé par l'image d'instruction (340), en déterminant le degré de conformité de la direction de déplacement détectée, du moment de démarrage de déplacement, de la durée de déplacement du contrôleur (20) avec les instructions commandées par l'image d'instruction (340), en utilisant les résultats de détection,
où la section de détection/détermination (110) est adaptée pour effectuer un premier processus qui compare la sortie de signal du capteur de grandeur physique (210) lors du déplacement du contrôleur (20) avec une première base de données de détermination de type et pour déterminer dans une plage admissible prédéterminée l'inclinaison du contrôleur (20) qui est déplacé, la première base de données de détermination de type étant reliée à la sortie de signal du capteur de grandeur physique (210) lors du déplacement du contrôleur (20) dans différentes inclinaisons dans la direction de déplacement commandée par l'image d'instruction (340) et la première base de données de détermination de type étant utilisée pour déterminer l'inclinaison du contrôleur (20), et
où la section de détection/détermination (110) est adaptée pour effectuer un deuxième processus qui compare la sortie de signal du capteur de grandeur physique (210) lors du déplacement du contrôleur (20) dans l'inclinaison déterminée par le premier processus dans la direction de déplacement commandée par l'image d'instructions (340) avec une deuxième base de données de détermination de type pour spécifier le mouvement du contrôleur (20) comprenant au moins la direction de déplacement, et pour déterminer le degré de conformité du mouvement spécifié avec le mouvement commandé, la deuxième base de données de détermination de type étant liée à l'inclinaison du contrôleur (20) déterminée sur la base de la première base de données de détermination de type, et étant utilisée pour déterminer le mouvement, le contrôleur (20) comprenant au moins la direction de déplacement à partir du signal délivré par le capteur de grandeur physique (210) lorsque le contrôleur est déplacé dans la direction de déplacement commandée par l'image d'instruction (340) .

2. Dispositif d'instruction d'entrée pour un système de simulation tel que défini dans la revendication 1, le dispositif d'instruction d'entrée comprenant en outre :
une section de calcul de simulation (112) qui comprend une sous-section adaptée pour afficher une image d'instruction de position qui commande de pointer vers une position prédéterminée de l'écran de simulation à un instant donné pendant la simulation,
où la section de calcul de simulation (112) est adaptée pour générer un événement lié à un pointage sur la position prédéterminée lorsque le pointage sur la position prédéterminée a été détecté au moment, et
où la section de génération d'image d'instruction (102) est adaptée pour générer l'image d'instruction qui commande un mouvement donné du contrôleur par rapport à la position pointée prédéterminée de l'écran de simulation comme l'événement lié au pointage à la position prédéterminée.

3. Dispositif d'instruction d'entrées pour un système de simulation tel que défini dans la revendication 1 ou 2,
où l'image d'instruction (340) comprend :
une partie d'image d'instruction de trajectoire de déplacement qui commande une direction de déplacement du contrôleur (20) le long d'une trajectoire donnée ; et
une partie d'image d'instruction de moment qui commande un moment de déplacement du contrôleur (20) le long de la trajectoire,
l'image d'instruction (340) étant mise à jour en fonction d'une modification du contenu de l'instruction.

4. Dispositif d'instruction d'entrées pour un système de simulation tel que défini dans la revendication 3,
où la partie d'image d'instruction de moment se déplace d'une position d'instruction de démarrage de mouvement à une position d'instruction de fin de mouvement le long de la partie d'image d'instruction de trajectoire de déplacement pour commander un moment de démarrage de mouvement et une durée de mouvement du contrôleur (20) le long de la trajectoire commandée.

5. Dispositif d'instruction d'entrées pour un système de simulation tel que défini dans la revendication 3 ou 4,
où au moins partie parmi la partie d'image d'instruction de trajectoire de déplacement et la partie d'image d'instruction de moment est affichée sous la forme d'une image de transition qui passe d'un affichage de notification précédent qui est affiché avant le moment de départ de déplacement à un affichage principal lorsque le moment de départ de déplacement est atteint.

6. Dispositif d'instruction d'entrées pour un système de simulation tel que défini dans l'une quelconque des revendications 3 à 5, dans lequel :
l'image d'instruction (340) est affichée sous la forme d'un ensemble de parties d'image d'instruction de trajectoire de déplacement qui commandent un trajet de déplacement continu en combinant une pluralité des parties d'image d'instruction de trajet de déplacement ; et
la partie d'image d'instruction de moment se déplace le long des parties d'image d'instruction de trajectoire de déplacement combinées en continu pour commander le moment de déplacement du contrôleur (20) le long d'une trajectoire de déplacement commandée par chacune des parties d'image d'instruction de trajectoire de déplacement.

7. Dispositif d'instruction d'entrées pour un système de simulation tel que défini dans l'une quelconque des revendications 1 à 6,
où la section de détection/détermination (110) est adaptée pour acquérir le signal du capteur de grandeur physique (210), et pour détecter un moment et une durée lorsque la quantité de déplacement du contrôleur (20) par unité de temps dépasse une valeur donnée comme moment de démarrage de déplacement et durée de déplacement du contrôleur (20) ; et
où la section de détection/détermination (110) est adaptée pour déterminer le degré de conformité du moment de démarrage de déplacement détectée et de la durée de déplacement du contrôleur (20) avec un moment de démarrage de déplacement et une durée de déplacement de détermination pour déterminer en relation avec le moment de démarrage de déplacement commandé et la durée de déplacement commandée par l'image d'instruction (340) lorsque la section de détection/détermination a déterminé que la direction de déplacement commandée du contrôleur (20) correspond à la direction de déplacement commandée par l'image d'instruction (340).

8. Dispositif d'instruction d'entrées pour un système de simulation tel que défini dans l'une quelconque des revendications 1 à 7,
où la section de génération d'image d'instruction (102) est adaptée pour générer l'image d'instruction (340) qui commande individuellement un mouvement donné pour au moins deux contrôleurs (20) ayant chacun un capteur de grandeur physique (210).

9. Dispositif d'instruction d'entrées pour un système de simulation tel que défini dans l'une quelconque des revendications 2 à 8, dans lequel
la section de calcul de simulation (112) est adaptée pour commander à un interprète d'exécuter une action de danse accompagnant le mouvement du contrôleur (20), pour générer un écran de simulation comprenant un caractère qui exécute une danse liée à l'action de danse commandée sur la base d'une entrée du contrôleur (20), et pour générer un signal musical de fond de danse,
où la section de génération d'image d'instruction (102) est adaptée pour générer l'image d'instruction (340) qui commande un mouvement donné du contrôleur (20) dans l'écran de simulation.

10. Dispositif d'instruction d'entrées pour un système de simulation tel que défini dans la revendication 9,
la section de calcul de simulation (112) comprenant une sous-section adaptée pour effectuer une production de simulation liée à un résultat de détermination du degré de conformité par la section de détection/détermination (110).

11. Dispositif d'instruction d'entrées pour un système de simulation tel que défini dans la revendication 9 ou 10,
la section de calcul de simulation (112) comprenant une sous-section adaptée pour spécifier une cause d'un fonctionnement incorrect du contrôleur (20) et pour notifier à l'interprète la cause du fonctionnement incorrect sur la base d'un résultat déterminé pour le degré de conformité par la section de détection/détermination (110).

12. Dispositif d'instruction d'entrée pour un système de simulation tel que défini dans l'une quelconque des revendications 9 à 11,
la section de calcul de simulation (112) comprenant une sous-section adaptée pour tracer le trajet de déplacement du contrôleur (20) détecté par la section de détection/détermination (110) dans l'écran de simulation en fonction d'une condition donnée.

13. Système de simulation de danse utilisant le dispositif d'instruction d'entrées pour un système de simulation tel que défini dans l'une quelconque des revendications 1 à 12.

14. Procédé d'instruction d'entrée pour un système de simulation comprenant :
une étape de génération d'une image d'instruction (340) qui commande un mouvement donné d'un contrôleur (20) comprenant un capteur de grandeur physique (210) ; ledit mouvement donné comprenant une direction de déplacement, un moment de démarrage de déplacement et une durée de déplacement du contrôleur en tant que mouvement, où le capteur de grandeur physique est un capteur d'accélération et est capable de détecter une grandeur physique dont une direction de déplacement et une quantité de déplacement par unité de temps peuvent être dérivées, et
une étape consistant à acquérir un signal à partir du capteur de grandeur physique (210) inclus dans le contrôleur (20) ; une étape consistant à détecter une inclinaison du contrôleur (20) puis la direction de déplacement, le moment de démarrage de déplacement et la durée de déplacement du contrôleur (20) ; et une étape consistant à déterminer le degré de conformité de la direction de déplacement détecté, du moment de démarrage de déplacement et de la durée de déplacement du contrôleur (20) avec le déplacement commandé par l'image d'instruction (340), en utilisant les résultats de détection, comprenant en outre
une étape consistant à exécuter un premier processus qui compare la sortie de signal du capteur de grandeur physique (210) lors du déplacement du contrôleur (20) avec une première base de données de détermination de type et à déterminer dans une plage admissible prédéterminée l'inclinaison du contrôleur (20) qui est déplacé, la première base de données de détermination de type étant reliée à la sortie de signal du capteur de grandeur physique (210) lors du déplacement du contrôleur (20) dans différentes inclinaisons dans la direction du déplacement commandée par l'image d'instruction (340) et la première base de données de détermination de type étant utilisée pour déterminer l'inclinaison du contrôleur (20), et
une étape d'exécution d'un deuxième processus qui compare le signal de sortie du capteur de grandeur physique (210) lors du déplacement du contrôleur (20) dans l'inclinaison déterminée par le premier processus dans la direction de déplacement commandée par l'image d'instruction (340) avec une deuxième base de données de détermination de type pour spécifier le mouvement du contrôleur (20) incluant au moins la direction de déplacement, et pour déterminer le degré de conformité du mouvement spécifié avec le déplacement commandé, la deuxième base de données de détermination de type étant liée à l'inclinaison du contrôleur (20) déterminée sur la base de la première base de données de détermination de type, et étant utilisée pour déterminer le mouvement, le contrôleur (20) comprenant au moins la direction de déplacement à partir de la sortie de signal du capteur de grandeur physique (210) lors du déplacement du contrôleur dans la direction de déplacement commandée par l'image d'instruction (340).
